(19) Europäisches Patentamt
European Patent Office
Office européen des brevets

(11) **EP 4 346 134 A1**

(12) **EUROPEAN PATENT APPLICATION**
published in accordance with Art. 153(4) EPC

(43) Date of publication:
**03.04.2024 Bulletin 2024/14**

(21) Application number: **22824016.4**

(22) Date of filing: **24.05.2022**

(51) International Patent Classification (IPC):
**H04L 1/00** (2006.01)     **H04W 84/12** (2009.01)

(52) Cooperative Patent Classification (CPC):
**H04B 7/0413; H04B 7/06; H04L 1/00; H04W 24/08;
H04W 84/12**

(86) International application number:
**PCT/CN2022/094791**

(87) International publication number:
**WO 2022/262535 (22.12.2022 Gazette 2022/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.06.2021  CN 202110680998**

(71) Applicant: **Huawei Technologies Co., Ltd.
Longgang
Shenzhen, Guangdong 518129 (CN)**

(72) Inventors:
• **DU, Rui
  Shenzhen, Guangdong 518129 (CN)**

• **LIU, Chenchen
  Shenzhen, Guangdong 518129 (CN)**
• **ZHANG, Meihong
  Shenzhen, Guangdong 518129 (CN)**
• **HAN, Xiao
  Shenzhen, Guangdong 518129 (CN)**
• **HU, Mengshi
  Shenzhen, Guangdong 518129 (CN)**
• **YANG, Xun
  Shenzhen, Guangdong 518129 (CN)**

(74) Representative: **Maiwald GmbH
Engineering
Elisenhof
Elisenstrasse 3
80335 München (DE)**

(54) **SENSING RESULT FEEDBACK METHOD AND APPARATUS, AND DEVICE AND MEDIUM**

(57)     A sensing result feedback method, an apparatus, a device, and a medium are provided. In an example method, a sensing initiating device sends an indication about truncation and feedback of a time domain channel estimation and sensing sequence to a first sensing responding device. The first sensing responding device truncates the received time domain channel estimation and sensing sequence based on the indication, and feeds back the truncated time domain channel estimation and sensing sequence. Therefore, a sensing sender may perform channel estimation and target sensing based on the truncated time domain channel estimation and sensing sequence. In this manner, feedback overheads can be significantly reduced, and sensing performance can be ensured to some extent.

FIG. 3

**Description**

**TECHNICAL FIELD**

This disclosure relates to the field of wireless local area networks, and more specifically, to a sensing result feedback method, an apparatus, a device, and a medium in wireless local area network (wireless local area network, WLAN) sensing (sensing).

**BACKGROUND**

A case of WLAN sensing is to sense a target in a direction of interest through a WLAN signal. Different from 802.11az, the target sensed in WLAN sensing does not need to carry any device. Technologies related to WLAN sensing can be widely used in scenarios such as intrusion detection, action identification, and breathing/heartbeat detection. One implementation of WLAN sensing is to perform sensing based on channel state information (channel state information, CSI). The CSI indicates a channel state between a sending device and a receiving device, and includes comprehensive detailed information. Therefore, the CSI may be performed to sense a target of interest in an environment.

**SUMMARY**

This disclosure provides a sensing result feedback solution in WLAN sensing.

According to a first aspect of this disclosure, a communication method is provided. In the method, a sensing initiating device sends, to a first sensing responding device, a first indication indicating that the first sensing responding device is used as a sensing receiver. The sensing initiating device sends a second indication to the first sensing responding device, where the second indication indicates the first sensing responding device to feed back a truncated time domain channel estimation and sensing sequence.

In some implementations, the sensing initiating device receives the truncated time domain channel estimation and sensing sequence from the first sensing responding device. The sensing initiating device performs channel estimation and target sensing based on the truncated time domain channel estimation and sensing sequence.

In some implementations, the truncated time domain channel estimation and sensing sequence fed back by the first sensing responding device is a part of a time domain long training field (LTF) sequence received by the first sensing responding device. The sensing initiating device receives the truncated time domain channel estimation and sensing sequence from the first sensing responding device by using a truncated long training field (T-LTF) frame.

In some implementations, the truncated time domain channel estimation and sensing sequence that is fed back by the first sensing responding device is represented by a T-LTF matrix. The T-LTF frame includes a multiple-input multiple-output (MIMO) control field, and the MIMO control field includes an indication for at least one of a quantity of columns, a quantity of rows, or a quantity of quantization bits of a matrix element of the T-LTF matrix.

In some implementations, the truncated time domain channel estimation and sensing sequence fed back by the first sensing responding device is a part of a time domain channel estimation field (CEF) sequence received by the first sensing responding device. The sensing initiating device receives the truncated time domain channel estimation and sensing sequence from the first sensing responding device by using a sensing feedback element field.

In some implementations, the sensing initiating device sends, to a second sensing responding device, a third indication indicating that the second sensing responding device is used as a sensing sender. The sensing initiating device sends the second indication to the second sensing responding device. The second indication further indicates the second sensing responding device to perform channel estimation and target sensing based on the truncated time domain channel estimation and sensing sequence fed back by the first sensing responding device.

In some implementations, the sensing initiating device sends a fourth indication about a truncation ratio of the time domain channel estimation and sensing sequence to the first sensing responding device.

In some implementations, the sensing initiating device sends the second indication to the first sensing responding device by using at least one of an announcement frame, a trigger frame, a null data packet announcement (NDPA) frame, or a beam refinement protocol (BRP) frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an association identifier (AID) field included in the dedicated information field in the NDPA frame indicates performing truncation and feedback on the time domain channel estimation and sensing sequence.

In some implementations, a BRP request field or a directional multi-gigabit (DMG) beam adjustment element field in the BRP frame indicates performing truncation and feedback on the time domain channel estimation and sensing sequence.

According to a second aspect of this disclosure, a communication method is provided. In the method, a first sensing responding device receives, from the sensing initiating device, a first indication indicating that the first sensing responding device is used as a sensing receiver. The first sensing responding device receives a second indication from the sensing initiating device, where the second indication indicates the first sensing responding device to feed back a truncated time domain channel estimation and sensing sequence. The first sensing responding device truncates the received time domain channel estimation and sensing sequence. The first sensing responding device feeds back the truncated time domain channel estimation and sensing sequence.

In some implementations, the first sensing responding device receives, from the sensing initiating device, a fourth indication about a truncation ratio of the time domain channel estimation and sensing sequence. The first sensing responding device truncates the time domain channel estimation and sensing sequence based on the truncation ratio.

In some implementations, the time domain channel estimation and sensing sequence includes a cyclic prefix CP. The truncated time domain channel estimation and sensing sequence excludes the CP.

In some implementations, the first sensing responding device sends the truncated time domain channel estimation and sensing sequence to the sensing initiating device.

In some implementations, the time domain channel estimation and sensing sequence is received by the first sensing responding device from a second sensing responding device. The first sensing responding device sends the truncated time domain channel estimation and sensing sequence to the second sensing responding device.

In some implementations, the first sensing responding device receives the second indication from the sensing initiating device by using at least one of an announcement frame, a trigger frame, an NDPA frame, or a BRP frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an AID field included in the dedicated information field in the NDPA frame indicates performing truncation and feedback on the time domain channel estimation and sensing sequence.

In some implementations, the truncated time domain channel estimation and sensing sequence is a part of a time domain LTF sequence received by the first sensing responding device. The first sensing responding device feeds back the truncated time domain channel estimation and sensing sequence by using a T-LTF frame.

In some implementations, the truncated time domain channel estimation and sensing sequence is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some implementations, a BRP request field or a DMG beam adjustment element field in the BRP frame indicates performing truncation and feedback on the time domain channel estimation and sensing sequence.

In some implementations, the truncated time domain channel estimation and sensing sequence is a part of a time domain CEF sequence received by the first sensing responding device. The first sensing responding device feeds back the truncated time domain channel estimation and sensing sequence by using a sensing feedback element field.

According to a third aspect of this disclosure, a communication method is provided. In the method, a second sensing responding device receives, from a sensing initiating device, a third indication that indicating that the second sensing responding device is used as a sensing sender. The second sensing responding device receives a second indication from the sensing initiating device, where the second indication indicates the second sensing responding device to perform channel estimation and target sensing based on a truncated time domain channel estimation and sensing sequence fed back by a first sensing responding device. The second sensing responding device sends the time domain channel estimation and sensing sequence to the first sensing responding device. The second sensing responding device receives the truncated time domain channel estimation and sensing sequence from the first sensing responding device. The second sensing responding device performs channel estimation based on the truncated time domain channel estimation and sensing sequence.

In some implementations, the second sensing responding device receives the second indication from the sensing initiating device by using at least one of an announcement frame, a trigger frame, an NDPA frame, or a BRP frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an AID field included in the dedicated information field in the NDPA frame indicates performing truncation and feedback on the time domain channel estimation and sensing sequence.

In some implementations, the time domain channel estimation and sensing sequence sent by the second sensing responding device includes a time domain LTF sequence. The second sensing responding device receives the truncated time domain channel estimation and sensing sequence from the first sensing responding device by using a T-LTF frame.

In some implementations, the truncated time domain channel estimation and sensing sequence received by the second sensing responding device is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some implementations, a BRP request field or a DMG beam adjustment element field in the BRP frame indicates performing truncation and feedback on the time domain channel estimation and sensing sequence.

In some implementations, the time domain channel estimation and sensing sequence sent by the second sensing responding device includes a time domain CEF sequence. The second sensing responding device receives the truncated time domain channel estimation and sensing sequence from the first sensing responding device by using a sensing feedback element field.

According to a fourth aspect of this disclosure, a communication apparatus is provided. The apparatus includes: a first sending module, configured to send, to a first sensing responding device by using a sensing initiating device, a first indication indicating that the first sensing responding device is used as a sensing receiver; and a second sending module, configured to send, by using the sensing initiating device, a second indication to the first sensing responding device, where the second indication indicates the first sensing responding device to feed back a truncated time domain channel estimation and sensing sequence.

In some implementations, the apparatus further includes: a first receiving module, configured to receive, from the first sensing responding device by using the sensing initiating device, the truncated time domain channel estimation and sensing sequence; and a first channel estimation module, configured to perform channel estimation and target sensing by using the sensing initiating device based on the truncated time domain channel estimation and sensing sequence.

In some implementations, the truncated time domain channel estimation and sensing sequence fed back by the first sensing responding device is a part of a time domain LTF sequence received by the first sensing responding device. The first receiving module is configured to receive, by using the sensing initiating device, the truncated time domain channel estimation and sensing sequence from the first sensing responding device by using a T-LTF frame.

In some implementations, the truncated time domain channel estimation and sensing sequence that is fed back by the first sensing responding device is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some implementations, the truncated time domain channel estimation and sensing sequence fed back by the first sensing responding device is a part of a time domain CEF sequence received by the first sensing responding device. The first receiving module is configured to receive, by using the sensing initiating device, the truncated time domain channel estimation and sensing sequence from the first sensing responding device by using a sensing feedback element field.

In some implementations, the apparatus further includes a third sending module, configured to send, to a second sensing responding device by using the sensing initiating device, a third indication indicating that the second sensing responding device is used as a sensing sender. The second sending module is further configured to send a second indication to the second sensing responding device, where the second indication further indicates the second sensing responding device to perform channel estimation and target sensing based on the truncated time domain channel estimation and sensing sequence fed back by the first sensing responding device.

In some implementations, the apparatus further includes: a fourth sending module, configured to send a fourth indication about a truncation ratio of the time domain channel estimation and sensing sequence to the first sensing responding device by using the sensing initiating device.

In some implementations, the first sending module is configured to send, by using the sensing initiating device, the second indication to the first sensing responding device by using at least one of an announcement frame, a trigger frame, an NDPA frame, or a BRP frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an association identifier (AID) field included in the dedicated information field in the NDPA frame indicates performing truncation and feedback on the time domain channel estimation and sensing sequence.

In some implementations, a BRP request field or a directional multi-gigabit (DMG) beam adjustment element field in the BRP frame indicates performing truncation and feedback on the time domain channel estimation and sensing sequence.

According to a fifth aspect of this disclosure, a communication apparatus is provided. The apparatus includes: a second receiving module, configured to receive, from a sensing initiating device by using a first sensing responding device, a first indication indicating that the first sensing responding device is used as a sensing receiver; a third receiving module, configured to receive, from the sensing initiating device by using the first sensing responding device, a second indication, where the second indication indicates the first sensing responding device to feed back a truncated time domain channel estimation and sensing sequence; a truncation module, configured to truncate the received time domain channel estimation and sensing sequence by using the first sensing responding device; and a feedback module, configured to feed back the truncated time domain channel estimation and sensing sequence by using the first sensing responding device.

In some implementations, the apparatus further includes a fourth receiving module, configured to receive, from the sensing initiating device by using the first sensing responding device, a fourth indication about a truncation ratio of the time domain channel estimation and sensing sequence. The truncation module is configured to truncate the time domain channel estimation and sensing sequence based on the truncation ratio by using the first sensing responding device.

In some implementations, the time domain channel estimation and sensing sequence includes a cyclic prefix CP. The truncated time domain channel estimation and sensing sequence excludes the CP.

In some implementations, the feedback module is configured to send the truncated time domain channel estimation and sensing sequence to the sensing initiating device by using the first sensing responding device.

In some implementations, the time domain channel estimation and sensing sequence is received by the first sensing responding device from a second sensing responding device. The feedback module is configured to send the truncated time domain channel estimation and sensing sequence to the second sensing responding device by using the first sensing responding device.

In some implementations, the third receiving module is configured to: receive, by using the first sensing responding device, the second indication from the sensing initiating device by using at least one of an announcement frame, a trigger frame, an NDPA frame, or a BRP frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an AID field included in the dedicated information field in the NDPA frame indicates performing truncation and feedback on the time domain channel estimation and sensing sequence.

In some implementations, the truncated time domain channel estimation and sensing sequence is a part of a time domain LTF sequence received by the first sensing responding device. The feedback module is configured to feed back, by using the first sensing responding device, the truncated time domain channel estimation and sensing sequence by using the T-LTF frame.

In some implementations, the truncated time domain channel estimation and sensing sequence that is fed back by the first sensing responding device is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some implementations, a BRP request field or a DMG beam adjustment element field in the BRP frame indicates performing truncation and feedback on the time domain channel estimation and sensing sequence.

In some implementations, the truncated time domain channel estimation and sensing sequence is a part of a time domain CEF sequence received by the first sensing responding device. The feedback module is configured to feed back, by using the first sensing responding device, the truncated time domain channel estimation and sensing sequence by using a sensing feedback element field.

According to a sixth aspect of this disclosure, a communication apparatus is provided. The apparatus includes: a fifth receiving module, configured to receive, from a sensing initiating device by using a second sensing responding device, a third indication indicating that the second sensing responding device is used as a sensing sender; a sixth receiving module, configured to receive, from the sensing initiating device by using the second sensing responding device, a second indication, where the second indication indicates the second sensing responding device to perform channel estimation and target sensing based on a truncated time domain channel estimation and sensing sequence fed back by a first sensing responding device; a fifth sending module, configured to send the time domain channel estimation and sensing sequence to the first sensing responding device by using the second sensing responding device; a seventh receiving module, configured to receive the truncated time domain channel estimation and sensing sequence from the first sensing responding device by using the second sensing responding device; and a second channel estimation module, configured to perform channel estimation and target sensing based on the truncated time domain channel estimation and sensing sequence by using the second sensing responding device.

In some implementations, the sixth receiving module is configured to: receive, by using the second sensing responding device, the second indication from the sensing initiating device by using at least one of an announcement frame, a trigger frame, an NDPA frame, or a BRP frame.

In some implementations, a common information field or a dedicated information field in the trigger frame indicates performing truncation and feedback on the time domain channel estimation and sensing sequence. In some implementations, a trigger type field included in the common information field in the trigger frame indicates performing truncation and feedback on the time domain channel estimation and sensing sequence.

In some implementations, a sounding dialog token field or a dedicated information field in the NDPA frame indicates performing truncation and feedback on the time domain channel estimation and sensing sequence. In some implementations, an AID field included in the dedicated information field in the NDPA frame indicates performing truncation and feedback on the time domain channel estimation and sensing sequence.

In some implementations, the time domain channel estimation and sensing sequence sent by the second sensing responding device includes a time domain LTF sequence. The seventh receiving module is configured to receive, by using the second sensing responding device, the truncated time domain channel estimation and sensing sequence from the first sensing responding device by using a T-LTF frame.

In some implementations, the truncated time domain channel estimation and sensing sequence received by the second sensing responding device is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some implementations, a BRP request field or a DMG beam adjustment element field in the BRP frame indicates performing truncation and feedback on the time domain channel estimation and sensing sequence.

In some implementations, the time domain channel estimation and sensing sequence sent by the second sensing responding device includes a time domain CEF sequence. The seventh receiving module is configured to receive, by using the second sensing responding device, the truncated time domain channel estimation and sensing sequence from the first sensing responding device by using a sensing feedback element field.

According to a seventh aspect of this disclosure, a communication device is provided. The device includes a processor, where the processor is coupled to a memory storing instructions. When the instructions are executed by the processor, the method according to the first, second, or third aspect of this disclosure is performed.

According to an eighth aspect of this disclosure, a computer-readable storage medium is provided, where a program is stored in the computer-readable storage medium. When at least part of the program is executed by a processor in a device, the device performs the method according to the first, second, or third aspect of this disclosure.

According to a ninth aspect of this disclosure, a computer program product is provided, including a computer program. When the computer program is executed by a processor, the method according to the first, second, or third aspect of this disclosure is performed.

It should be understood that content described in the summary part is not intended to limit a key or important feature of this disclosure, and is not intended to limit the scope of this disclosure. The following descriptions facilitate understanding of other features of this disclosure.

## BRIEF DESCRIPTION OF DRAWINGS

The foregoing and other features, advantages, and aspects of embodiments of this disclosure become more apparent in conjunction with the accompanying drawings and with reference to the following detailed description. In the accompanying drawings, the same or similar reference numerals indicate the same or similar elements.

FIG. 1a and FIG. 1b illustrate two example scenarios of CSI feedback in WLAN sensing;
FIG. 2 illustrates an example environment in which embodiments of this disclosure may be implemented;
FIG. 3 illustrates a sensing result feedback process according to some embodiments of this disclosure;
FIG. 4 illustrates a truncation and feedback processing process according to some embodiments of this disclosure;
FIG. 5a, FIG. 5b, and FIG. 5c illustrate channel estimation performance, based on a truncated time domain LTF sequence, obtained when truncation ratios are respectively 1/4, 3/8, and 4/8 in a feedback process shown in FIG. 4;

FIG. 6 illustrates a flowchart of a sensing result feedback method implemented at a sensing initiating device according to some embodiments of this disclosure;

FIG. 7 illustrates an example sensing process according to some embodiments of this disclosure;

FIG. 8a illustrates an example frame format of a trigger frame according to some embodiments of this disclosure;

FIG. 8b illustrates an example frame format of a common information field of a trigger frame according to some embodiments of this disclosure;

FIG. 8c illustrates an example frame structure of a trigger-based common information field in a common information field of a trigger frame according to some embodiments of this disclosure;

FIG. 9a illustrates an example frame format of a null data packet announcement (NDPA) frame according to some embodiments of this disclosure;

FIG. 9b illustrates an example frame format of a station information 1 field of an NDPA frame according to some embodiments of this disclosure;

FIG. 10 illustrates an example process of high frequency beam training according to some embodiments of this disclosure;

FIG. 11 illustrates an example structure of a beam refinement protocol (BRP) request field according to some embodiments of this disclosure;

FIG. 12 illustrates an example structure of a directional multi-gigabit (DMG) beam refinement element field according to some embodiments of this disclosure;

FIG. 13 illustrates a flowchart of a truncation and feedback method of a time domain channel estimation and sensing sequence at a first sensing responding device according to some embodiments of this disclosure;

FIG. 14 illustrates an example frame structure of an HE multiple-input multiple-output (MIMO) control field according to some embodiments of this disclosure;

FIG. 15 shows a frame structure of a conventional EHT MIMO control (EHT MIMO control) field;

FIG. 16 illustrates an example frame structure of an EHT MIMO control field according to some embodiments of this disclosure;

FIG. 17 illustrates a flow chart of a channel estimation method performed at a second sensing responding device as a sensing sender according to some embodiments of this disclosure;

FIG. 18a and 18b illustrate a channel estimation result based on a time domain LTF sequence with a truncation ratio of 4/8 according to some embodiments of this disclosure;

FIG. 19 illustrates a schematic block diagram of a structure of an apparatus implemented at a sensing initiating device according to some embodiments of this disclosure;

FIG. 20 illustrates a schematic block diagram of a structure of an apparatus implemented at a first sensing responding device according to some embodiments of this disclosure;

FIG. 21 illustrates a schematic block diagram of a structure of an apparatus implemented at a second sensing responding device according to some embodiments of this disclosure; and

FIG. 22 illustrates a block diagram of a device in which some embodiments of this disclosure may be implemented.

## DESCRIPTION OF EMBODIMENTS

The following describes embodiments of this disclosure in detail with reference to the accompanying drawings. Although some embodiments of this disclosure are shown in the accompanying drawings, it should be understood that this disclosure may be implemented in various forms, and should not be construed as being limited to the embodiments described herein. On the contrary, these embodiments are provided so that this disclosure will be thoroughly and completely understood. It should be understood that the accompanying drawings and embodiments of this disclosure are merely used as examples, but are not intended to limit the protection scope of this disclosure.

As used herein, the term "including" and its variants are open to include, to be specific, "including but not limited to". The term "based on" is "based at least in part on". The term "an embodiment" means "at least one embodiment"; and the term "another embodiment" means "at least one another embodiment". Other terms are defined in the following description.

It should be understood that although the terms "first" and "second" may be used herein to describe various components, these components should not be limited by these terms. These terms are used only to distinguish one element from another. As used in this specification, the term "and/or" includes any and all combinations of one or more listed terms.

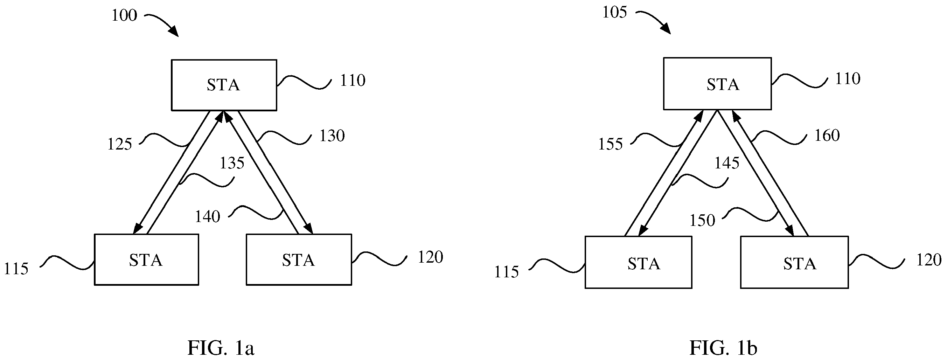

As described above, an implementation of WLAN sensing is to perform sensing by using CSI. FIG. 1a and FIG. 1b illustrate two example scenarios 100 and 105 of CSI feedback in WLAN sensing.

In the scenario 100 shown in FIG. 1a, a station (station, STA) 110 acts as a sensing initiator for initiating a sensing procedure and a receiving end for receiving a sensing signal in the sensing procedure. A STA 115 and a STA 120 act as sensing responders for responding to and participating in the sensing procedure initiated by the sensing initiator and act as transmit ends for sending a sensing signal in the sensing procedure. As shown in FIG. 1a, the STA 110 sends (125, 130) a trigger (trigger) frame to the STA 115 and the STA 120, and the STA 115 and the STA 120 send (135, 140) a sensing (sensing) physical layer protocol data unit (physical layer protocol data unit, PPDU) to the STA 110. The STA 110 receives the sensed PPDU and measures an environment/channel to obtain the CSI.

In the scenario 105 shown in FIG. 1b, the STA 110 acts as a sensing initiator and a transmit end, and the STA 115 and the STA 120 act as sensing responders and receiving ends. As shown in FIG. 1b, the STA 110 sends (145, 150) a sensing PPDU to the STA 115 and the STA 120, and the STA 115 and the STA 120 receive the sensing PPDU, measure an environment/channel, and feed back (155, 160) CSI obtained through measurement to the STA 110. This is explicit feedback of CSI.

Currently, in the 802.11 standard, there are two conventional CSI explicit feedback manners, including CSI matrix (CSI matrix) feedback and compressed CSI (compressed CSI) feedback. The CSI matrix is usually a complete CSI matrix, and includes all channel state information obtained through measurement. Operation based on the CSI matrix may implement target sensing. However, because overheads are large, the CSI matrix is used only in 802.11n, and is no longer used after 802. 11ac.

The compressed CSI is a CSI feedback mode introduced after 802.11ac. In this manner, singular value decomposition (SVD) is first performed on the CSI matrix, rotation angle resolution (for example, Givens Rotation decomposition) is performed on an obtained right singular matrix V, and an obtained angle is fed back. For example, an angle value obtained through decomposition may be quantized based on a specified quantity of bits and then transmitted. The compressed CSI may be used to support multiple-input multiple-output (multi-input multi-output, MIMO) precoding, and may well support communication data transmission. However, some information is lost in the foregoing angle calculation process, and therefore WLAN sensing cannot be better supported.

Another CSI feedback manner is feedback based on a power delay profile (power delay profile, PDP). In this manner, inverse fast Fourier transform (inverse fast Fourier transform, IFFT) processing may be performed on a frequency domain CSI on a single antenna obtained through channel estimation, to obtain the PDP in time domain. The PDP may indicate a relationship between energy and delay or distance on a path of the sensing signal propagation, also referred to as an energy delay image. During feedback, PDP data in a range of interest may be selected for transmission, to reduce feedback overheads. In consideration of non-ideal synchronization and the like, it may be necessary to feed back information about several more distance units relative to distance units within the range of interest. PDP-based feedback needs to perform an additional step of IFFT processing for the frequency domain CSI after channel estimation is completed and the frequency domain CSI is obtained. Therefore, modification of a physical layer (PHY) is required.

Embodiments of this disclosure provide a new sensing result feedback mechanism for WLAN sensing. According to this mechanism, in a sensing process initiated by a sensing initiating device, the sensing initiating device first assigns a sensing role to a sensing responding device. Specifically, the sensing initiating device sends an indication (referred to as a "first indication") that indicates the sensing initiating device serves to be a sensing receiver to a sensing responding device (referred to as a "first sensing responding device"). Then, the sensing initiating device further sends, to the first sensing responding device, an indication (referred to as a "second indication") about truncation and feedback of a time domain sensing signal. After the first sensing responding device receives the second indication, the first sensing responding device truncates the received time domain sensing signal and feeds back the truncated time domain sensing signal. In some embodiments, the first sensing responding device may send the truncated time domain sensing signal to the sensing initiating device, so that the sensing initiating device performs channel estimation based on the truncated time domain sensing signal. In this case, the sensing initiating device may act as the sensing sender.

In some other embodiments, another sensing responding device (referred to as a "second sensing responding device") may act as the sensing sender. In this case, when assigning a sensing role, the sensing initiating device sends an indication (referred to as a "third indication") indicates the sensing initiating device to be a sensing sender to the second sensing responding device. In addition, the sensing initiating device further sends the second indication about truncation and feedback of the time domain sensing signal to the second sensing responding device. In this way, after the second sensing responding device sends the time domain sensing signal to the first sensing responding device, the first sensing responding device truncates the time domain sensing signal received from the second sensing responding device, and feeds back the time domain sensing signal to the second sensing responding device. Then, the second sensing responding device performs channel estimation based on the truncated time domain sensing signal.

In this manner, after receiving the time domain sensing signal (for example, a time domain channel estimation field), the sensing receiver may perform truncation (or tailoring) feedback, for example, select only a part of the received field for feedback. The sensing sender may perform channel estimation after receiving the tailored time domain channel estimation field, to obtain a sensing parameter. In this manner, overheads (overhead) for feeding back the CSI can be significantly reduced, and sensing performance can be ensured to some extent.

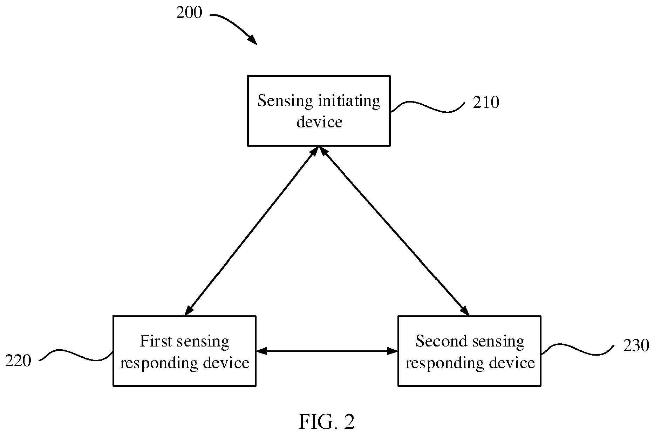

FIG. 2 illustrates an example environment 200 in which embodiments of this disclosure may be implemented.

As shown in FIG. 2, the environment 200 is a part of a WLAN, and includes a sensing initiating device 210, a first sensing responding device 220, and a second sensing responding device 230. In this example, the sensing initiating device 210, the first sensing responding device 220, and the second sensing responding device 230 are all STAs. It should be understood that this is merely an example rather than a limitation. Depending on specific implementation and scenarios, the sensing initiating device 210, the first sensing responding device 220, and the second sensing responding device 230 may be any one of a STA or an access point (access point, AP). The sensing initiating device 210, the first sensing responding device 220, and the second sensing responding device 230 may be implemented by any appropriate device, which includes but is not limited to an AP and a STA such as a communication server, a router, a switch, a bridge, a computer, or a mobile phone.

It should also be understood that the environment 200 illustrates one sensing initiating device and two sensing responding devices for illustrative purposes only. In the following, a scenario (as shown in FIG. 2) with a plurality of sensing responding devices and one sensing initiating device is used as an example to describe various embodiments of this disclosure. However, it should be understood that embodiments of this disclosure may be extended to a scenario including a plurality of sensing responding devices and a plurality of sensing initiating devices.

In the environment 200, the sensing initiating device 210 can communicate wirelessly with the first sensing responding device 220 and the second sensing responding device 230, and the first sensing responding device 220 can communicate wirelessly with the second sensing responding device 230. The communication may comply with any appropriate communication technology and corresponding communication standards.

In some embodiments of this disclosure, in a WLAN sensing process, the first sensing responding device 220, as a sensing receiver, receives a time domain sensing signal from the second sensing responding device 230, as a sensing sender. The sensing signal may be implemented based on any suitable signal. As an example, the sensing signal may be implemented by sensing a physical layer protocol data unit (physical layer protocol data unit, PPDU). For example, the second sensing responding device 230 may send a null data packet (null data packet, NDP) as the sensing signal. The second sensing responding device 230 may also send a data packet including valid data as the sensing signal. The sensing signal may also be another signal known by the first sensing responding device 220 and the second sensing responding device 230 as receiving and sending parties.

For example, in a low frequency system such as a system below 7 GHz (for example, sub 7 GHz), the sensing signal may include a frequency domain long training field (long training field, LTF) sequence. In a high frequency system such as a system of 60 GHz, the sensing signal may include a time domain channel estimation field (channel estimation field, CEF) sequence. The following describes this embodiment of this aspect in detail.

According to this embodiment of this disclosure, the first sensing responding device 220 truncates the received time domain sensing signal based on the second indication that is about the truncation and feedback of the time domain sensing signal and that is received from the sensing initiating device 210, and then feeds back the truncated time domain sensing signal to the second sensing responding device 230. The second sensing responding device 230 performs channel estimation and target sensing based on the truncated time domain sensing signal.

For ease of discussion, some embodiments of this disclosure are described by using an example in which the first sensing responding device 220 is a sensing receiver and the second sensing responding device 230 is a sensing sender. However, it should be understood that this is merely an example rather than a limitation. In some embodiments, the sensing initiating device 210 may be used as a sensing sender, and the first sensing responding device 220 may be used as a sensing receiver. In some embodiments, the first sensing responding device 220 or the second sensing responding device 230 may also perform sending and receiving, and act as both a sensing sender and a sensing receiver.

Because the sensing receiver directly feeds back the truncated time domain sensing signal, processing of the sensing receiver is greatly reduced, and feedback efficiency is improved. In addition, because the fed-back time domain sensing signal is truncated, feedback overheads are reduced, and sensing performance can be ensured to some extent.

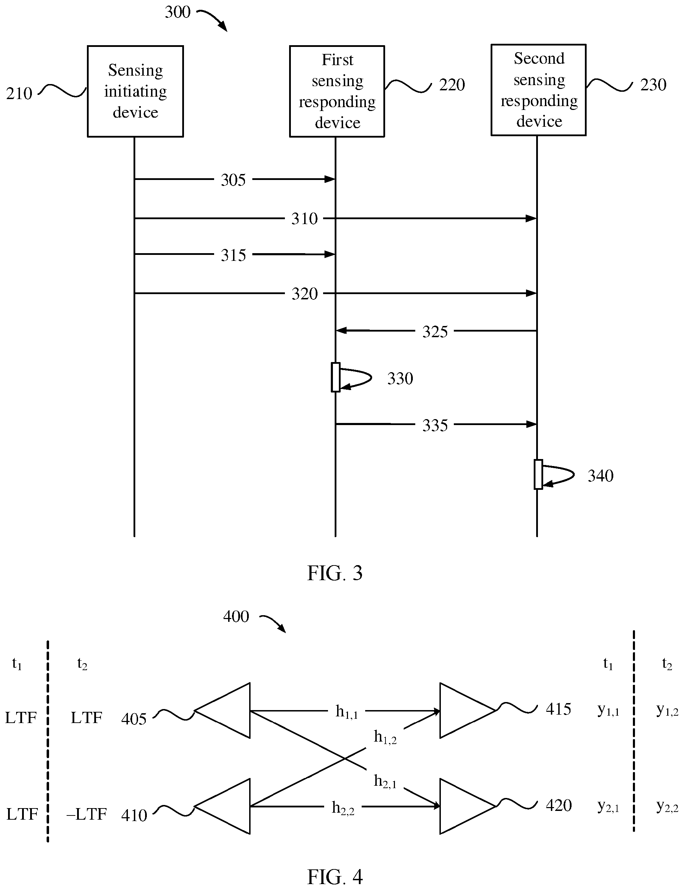

FIG. 3 illustrates a sensing result feedback process 300 according to some embodiments of this disclosure. For ease of discussion, the following describes the process 300 with reference to FIG. 2.

In process 300, the sensing initiating device 210 first performs sensing role assignment. As shown in FIG. 3, the sensing initiating device 210 sends (305) a first indication indicating that the first sensing responding device 220 is used as a sensing receiver to the first sensing responding device 220, and sends (310) a third indication indicating that the second sensing responding device 230 is used as a sensing sender to the second sensing responding device 230. The sensing initiating device 210 further sends (315, 320) a second indication about truncation and feedback of a time domain sensing signal to the first sensing responding device 220 and the second sensing responding device 230. The indication may be carried by any appropriate message or field in an explicit or implicit manner. The following describes this embodiment of this aspect in detail.

Then, the second sensing responding device 230 sends (325) a time domain sensing signal to the first sensing responding device 220. The first sensing responding device 220 truncates (330) the received time domain sensing signal, and sends (335) a truncated time domain sensing signal to the second sensing responding device 230. Refer to FIG. 4. A truncation and feedback processing process of the first sensing responding device 220 is described below by using 2 x 2 multiple-input multiple-output (multiple-input multiple-output, MIMO) channel estimation as an example.

FIG. 4 illustrates an example truncation and feedback process 400 performed at the first sensing responding device 220 according to some embodiments of this disclosure.

The process 400 relates to a MIMO scenario with two transmitters, two receivers, and two flows. In the process 400, the second sensing responding device 230 as a sensing sender uses a P matrix of P = [1 1; 1 -1] on two transmit antennas 405 and 410 to send a frequency domain LTF sequence as a sensing signal. It should be noted that, in the MIMO scenario, the sensing receiver needs to truncate and feed back time domain LTF sampling (representing convolution of the time domain LTF sequence and a channel) of each solved flow.

For example, signals received by two receive antennas 415 and 420 of the first sensing responding device 220 as the sensing receiver at two moments (t1, t2) are:

$$y_{1,1} = (h_{1,1} + h_{1,2}) * LTF$$

$$y_{2,1} = (h_{2,1} + h_{2,2}) * LTF$$

$$y_{1,2} = (h_{1,1} - h_{1,2}) * LTF$$

$$y_{2,2} = (h_{2,1} - h_{2,2}) * LTF$$

* is a convolutional symbol, $h_{1,1}$, $h_{2,1}$, $h_{1,2}$, and $h_{2,2}$ respectively represent channels from the transmit antenna 405 to the receive antenna 415, from the transmit antenna 405 to the receive antenna 420, from the transmit antenna 410 to the receive antenna 415, and from the transmit antenna 410 to the receive antenna 420. LTF represents a time domain signal of a frequency domain LTF sequence.

In some embodiments, the first sensing responding device 220 may solve the time domain signal of the frequency domain LTF sequence that includes channel information and that is on a plurality of flows, for example, may obtain:

$$h_{1,1} * LTF = (y_{1,1} + y_{1,2})/2$$

$$h_{2,1} * LTF = (y_{2,1} + y_{2,2})/2$$

$$h_{1,2} * LTF = (y_{1,1} - y_{1,2})/2$$

$$h_{2,2} * LTF = (y_{2,1} - y_{2,2})/2$$

After obtaining time domain LTFs including the channel information (for example, $h_{1,1}$, $h_{2,1}$, $h_{1,2}$, and $h_{2,2}$), the first sensing responding device 220 may truncate and feed back time domain signals (for example, $h_{1,1} * LTF$, $h_{2,1} * LTF$, $h_{1,2} * LTF$, and $h_{2,2} * LTF$) of the LTFs including the channel information based on a specific ratio.

In some embodiments, the first sensing responding device 220 may directly truncate a received signal and feed back the signal. For example, $y_{1,1}$, $y_{2,1}$, $y_{1,2}$, and $y_{2,2}$ described above may be directly truncated and fed back based on a ratio. For example, some time domain signals such as 1/8 and 2/8 are truncated from the time domain signals $y_{1,1}$, $y_{2,1}$, $y_{1,2}$, and $y_{2,2}$ for feedback. The truncated part may be a start part, a middle part, or an end part. After receiving these signals, the second sensing responding device 230 and the sensing initiating device 210 perform MIMO channel estimation. In some embodiments, when the first sensing responding device 220 truncates the signals $y_{1,1}$, $y_{2,1}$, $y_{1,2}$ and $y_{2,2}$, it needs to be ensured that the signals are truncated to a same position, to ensure channel estimation effectiveness. In this way, accuracy of MIMO channel estimation of the second sensing responding device 230 and the sensing initiating device 210 can be ensured.

Different from the conventional technology (for example, a CSI matrix, compressed CSI, and PDP-based feedback) described above, feedback is performed based on a result of channel estimation. In the process 400, the time domain LTF signal including the channel information is fed back, and channel estimation does not need to be completed during feedback. In the MIMO scenario, a time domain LTF signal including channel information on each flow may need to be solved.

In some embodiments, the sensing signal sent by the second sensing responding device 230 includes a cyclic prefix (cyclic prefix, CP) to resist multipath fading. In practice, CP removal may be incomplete due to factors such as a synchronization error. In this case, if the first sensing responding device 220 truncates the received time domain sensing signal from a leftmost start point, a CP part may also be truncated. Based on a channel estimation result of the truncated time domain sensing signal, an offset is generated as a whole. To further improve channel estimation performance, when the first sensing responding device 220 performs truncation, it may be considered to avoid the CP as much as possible, for example, the first sensing responding device 220 may start truncation from a middle position of the received time domain sensing signal, to exclude the CP.

After receiving the truncated time domain sensing signal from the first sensing responding device 220, the second sensing responding device 230 performs channel estimation (340) based on the truncated time domain sensing signal, as shown in FIG. 3.

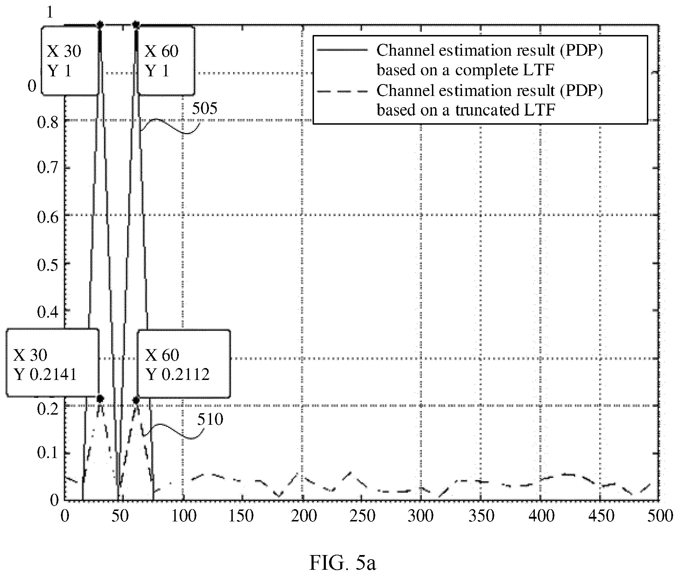

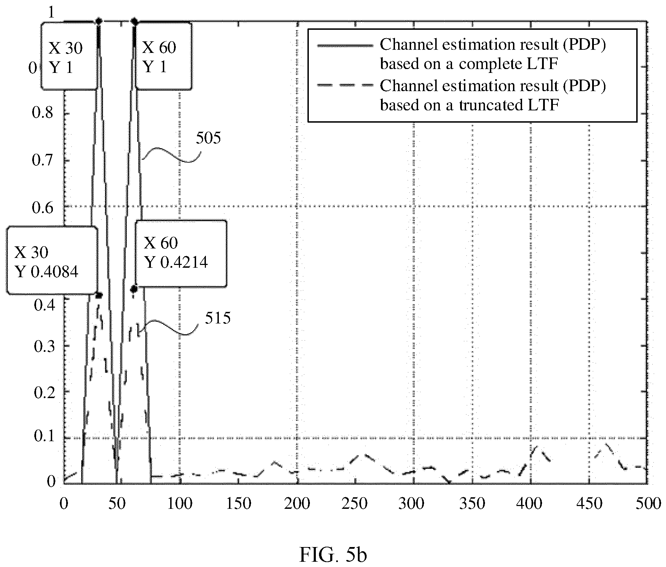

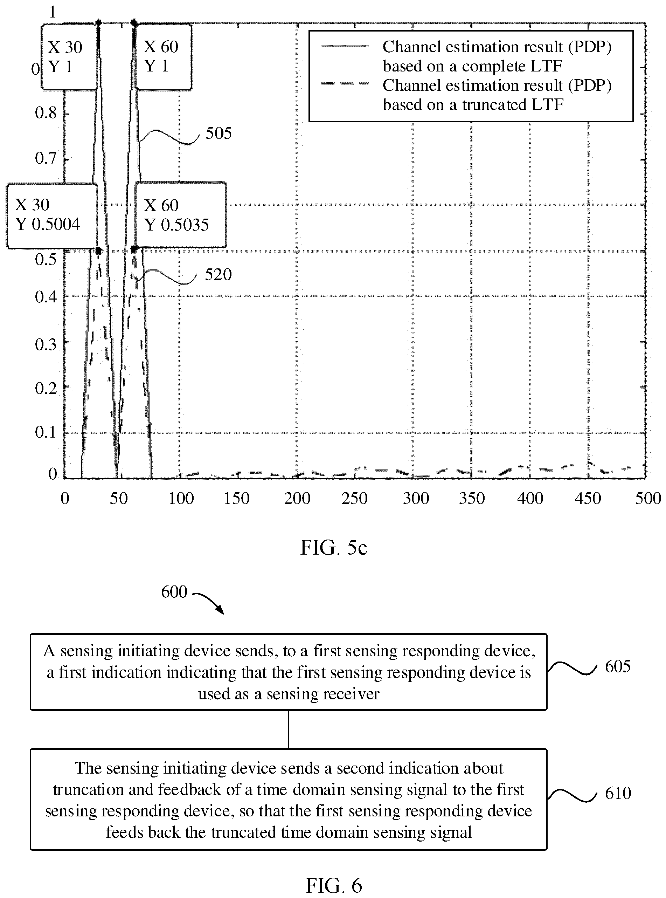

FIG. 5a, FIG. 5b, and FIG. 5c illustrate channel estimation performance based on a truncated time domain LTF sequence when truncation ratios are respectively 1/4, 3/8, and 4/8 in a feedback process 400 shown in FIG. 4. The truncation ratio may represent a ratio of a length of a sensing signal truncated in time domain to a length of an original sensing signal.

The channels shown in FIG. 5a, FIG. 5b, and FIG. 5c include two multipaths, which are respectively located at 30 m and 60 m of a propagation path. As shown in the figure, compared with a channel estimation result PDP 505 based on a complete LTF, when channel estimation is performed based on an LTF truncated based on the 1/4 truncation ratio, an overall side lobe of a channel estimation result PDP 510 increases, and an amplitude corresponding to a peak position decreases. However, target path information corresponding to the peak position is still correct, and based on the channel estimation result, subsequent signal processing may continue to be performed to complete target sensing.

With reference to a channel estimation result PDP 515 based on an LTF truncated based on the truncation ratio of 3/8 shown in FIG. 5b and a channel estimation result PDP 520 based on an LTF truncated based on the truncation ratio of 4/8 shown in FIG. 5c, it can be seen that a longer LTF of truncation and feedback (the truncation ratio is closer to 1) indicates better channel estimation performance, but corresponding feedback redundancy is greater. Correspondingly, a shorter LTF of truncation and feedback (the truncation ratio is closer to 0) indicates smaller feedback redundancy, but channel estimation performance is low.

In some embodiments, the sensing initiating device 210 may act as an execution body of channel estimation. In such an embodiment, after the first sensing responding device 220 truncates the time domain sensing signal received from the second sensing responding device 230, the first sensing responding device 220 may send the truncated time domain sensing signal to the sensing initiating device 210, and then the sensing initiating device 210 performs channel estimation and target sensing based on the truncated time domain sensing signal.

In some embodiments, the sensing initiating device 210 may also be used as a sensing sender to send the sensing signal to the first sensing responding device 220. Correspondingly, after truncating the received time domain sensing signal, the first sensing responding device 220 sends the truncated time domain sensing signal to the sensing initiating device 210.

FIG. 6 illustrates a flowchart of a sensing result feedback method 600 implemented at a sensing initiating device 210 according to some embodiments of this disclosure.

As shown in FIG. 6, in a block 605, a sensing initiating device 210 sends, to a first sensing responding device 220, a first indication indicating that the first sensing responding device 220 is used as a sensing receiver. The indication may be implemented in any appropriate manner. As an example, the sensing initiating device 210 may indicate to the first sensing responding device 220 to be the sensing receiver by using an announcement (announcement) frame.

In a block 610, the sensing initiating device 210 sends a second indication to the first sensing responding device 220, where the second indication indicates the first sensing responding device 220 to feed back a truncated time domain channel estimation and sensing sequence. The time domain channel estimation and sensing sequence may include a time domain signal of a low frequency domain LTF sequence and/or a high frequency time domain CEF sequence.

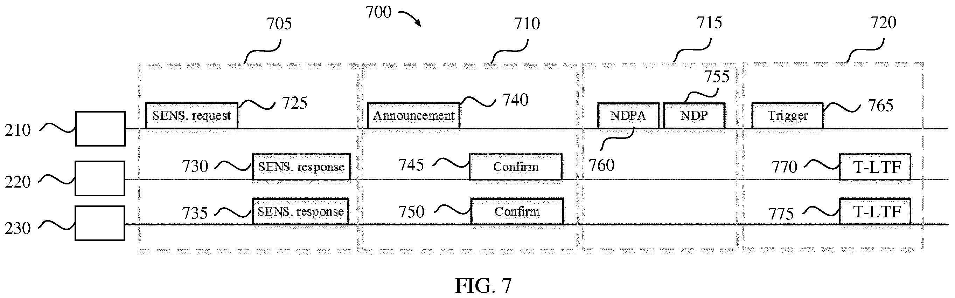

In the embodiment where the second sensing responding device 230 is the sensing sender, the sensing initiating device 210 may further send, to the second sensing responding device 230, a third indication indicating that the second sensing responding device 230 is used as a sensing sender, and send the second indication to the second sensing responding device 230, indicating the second sensing responding device 230 to perform channel estimation and target sensing based on the truncated time domain channel estimation and sensing sequence fed back by the first sensing responding device 220. The following discusses an example implementation of that the sensing initiating device 210 sends a second indication about truncation and feedback of the time domain channel estimation and sensing sequence with reference to FIG. 7.

FIG. 7 illustrates an example sensing process 700 according to some embodiments of this disclosure.

As shown in FIG. 7, the sensing process 700 includes a discovery phase 705, a setting phase 710, a measurement phase 715, and a feedback phase 720. In the discovery phase 705, a sensing initiating device 210 sends a sensing request (SENS. request) frame 725, and a first sensing responding device 220 and a second sensing responding device 230 return sensing responding (SENS. response) frames 730 and 735, to exchange information such as a device capability.

In the setting phase 710, the sensing initiating device 210 sends an announcement (announcement) frame 740 to assign a sensing role, specify a transmission period of a sensing signal, and so on. In this example, the sensing initiating device 210 is used as a sender of the sensing signal, and both the first sensing responding device 220 and the second sensing responding device 230 are used as receivers of the sensing signal. The first sensing responding device 220 and the second sensing responding device 230 reply with confirmation (confirmation) frames 745 and 750.

In the measurement phase 715, the sensing initiating device 210 sends a sensing physical layer protocol data unit (PPDU). In this example, the sensing initiating device 210 sends a null data packet (null data packet, NDP) 755 as the sensing signal to the first sensing responding device 220 and the second sensing responding device 230. Furthermore, the sensing initiating device 210 also sends a null data packet announcement (null data packet announcement, NDPA) frame 760.

In the feedback phase 720, the sensing initiating device 210 sends a trigger (trigger) frame 765 to trigger the first sensing responding device 220 and the second sensing responding device 230 to perform truncation and feedback. Correspondingly, the first sensing responding device 220 and the second sensing responding device 230 feed back truncated LTF (truncated long training field, T-LTF) signals 770 and 775 after truncating a received time domain LTF signal.

In some embodiments, the sensing initiating device 210 may send a second indication about truncation and feedback of the time domain channel estimation and sensing sequence by using the announcement frame 740 of the sensing setting phase 710. The announcement frame 740 may include an indication (referred to as a "fourth indication") of a truncation ratio. For example, the announcement frame 740 may include a report ratio (report ratio) field, used to indicate a truncation ratio. Table 1 below shows an example of the report ratio field.

**Table 1**

| Report ratio | Truncation ratio |
| --- | --- |
| 000 | 1/8 |
| 001 | 2/8 |
| ... | ... |

In this example, the report ratio field has 3 bits, where a value 000 indicates that the truncation ratio is 1/8, a value 001 indicates that the truncation ratio is 2/8, and so on. The truncation ratio may represent a ratio of a length of an LTF truncated in time domain to an original LTF. A truncated part may be any part of an LTE time domain signal, for example, includes a head, a middle part, or a tail. As shown in FIG. 5a, FIG. 5b, and FIG. 5c, a smaller truncation ratio indicates a smaller signal feedback amount, but channel estimation performance is correspondingly reduced. Correspondingly, a larger ratio (a longer time domain LTF is fed back) indicates a larger feedback amount, and channel estimation performance is correspondingly improved.

In some embodiments, the truncation and feedback on the time domain channel estimation and sensing sequence may be implicitly indicated by using the report ratio field. For example, if the announcement frame 740 received by the first sensing responding device 220 from the sensing initiating device 210 has the report ratio field, the first sensing responding device 220 may determine that truncation feedback of the time domain channel estimation and sensing sequence need to be performed, and may determine a corresponding truncation ratio based on a value of a bit included in the report ratio field.

A manner of indicating truncation and feedback by using the announcement frame 740 may be applied to a low frequency system such as below 7 GHz (for example, sub 7 GHz) and a high frequency system such as 60 GHz. In a low frequency system, such as sub 7 GHz (for example, 11ax and 11be), the sensing initiating device 210 may also send a second indication of the truncation and feedback to the first sensing responding device 220 and the second sensing responding device 230 by using a trigger frame 765 and/or an NDPA frame 760. An existing field in the foregoing frame may be reused for transmission of the second indication, or a new field may be used.

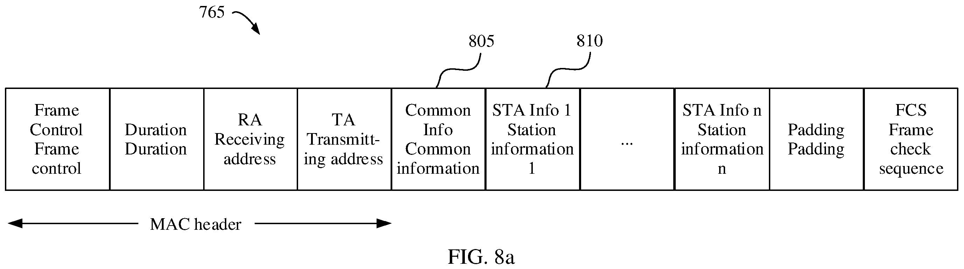

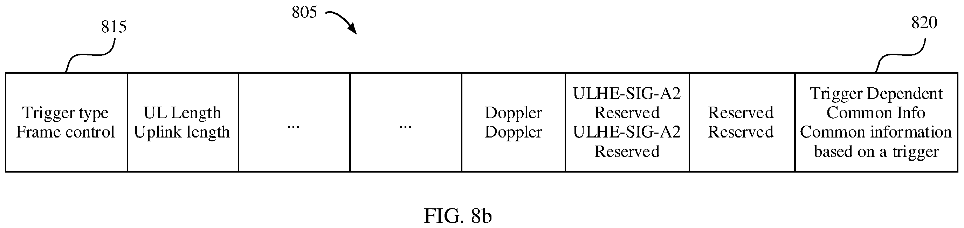

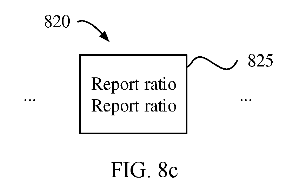

Refer to FIG. 8a, FIG. 8b, and FIG. 8c below. An example implementation of that the sensing initiating device 210 sends the second indication about truncation and feedback to the first sensing responding device 220 or the second sensing responding device 230 by using the trigger frame 765 in the feedback phase 720 is discussed.

First, refer to FIG. 8a. An example frame format of the trigger frame 765 is shown according to some embodiments of this disclosure.

As an example, a second indication about truncation and feedback may be transmitted using a common information (Common info) field 805 of the trigger frame 765 or a dedicated information field such as a station information 1 (STA info 1) field 810. Any field of a common information field 805 and a dedicated information field may be reused or a new field may be designed to transmit the indication.

FIG. 8b illustrates an example frame format of a common information field 805 of the trigger frame 765 according to some embodiments of this disclosure. As an example, a trigger type (trigger type) field 815 included in the common information field 805 of the trigger frame may indicate that truncation and feedback is to be made. For example, a new trigger type may be added, which is referred to as T-LTF extraction (T-LTF Poll), and indicate truncation and feedback. Table 2 below shows an example of a trigger type field value.

**Table 2**

| Trigger type (Trigger type) | Trigger frame variant (Trigger frame variant) |
|---|---|
| 0 | Basic (basic) |
| 1 | Beamforming report extraction (Beamforming report poll) |
| ... | ... |
| 7 | NDP feedback report extraction (NDP feedback report poll) |
| 8 | T-LTF extraction (T-LTF poll) |
| 9 to 15 | Reserved (Reserved) |

As shown in Table 2, when a trigger type field value is 8, it indicates that truncation and feedback of the time domain channel estimation and sensing sequence needs to be performed. Correspondingly, when receiving the trigger frame whose trigger type field value is 8, the first sensing responding device 220 or the second sensing responding device 230 may determine that the sensing initiating device 210 requires to perform truncation and feedback on the time domain channel estimation and sensing sequence.

In an embodiment in which the WLAN sensing process further supports PDP data feedback, the common information field 805 of the trigger frame may indicate two trigger types: PDP report extraction (PDP report poll) and T-LTF extraction. Table 3 below shows another example of the trigger type field value.

**Table 3**

| Trigger type (Trigger type) | Trigger frame variant (Trigger frame variant) |
|---|---|
| 0 | Basic (basic) |
| 1 | Beamforming report extraction (Beamforming report poll) |
| ... | ... |
| 7 | NDP feedback report extraction (NDP feedback report poll) |
| 8 | PDP report extraction (PDP report poll) |
| 9 | T-LTF extraction (T-LTF poll) |
| 10 to 15 | Reserved (Reserved) |

In the example shown in Table 3, if the trigger type field value is 8, it indicates that PDP data feedback is to be performed. If the trigger type field value is 9, it indicates that truncation and feedback of the time domain channel estimation and sensing sequence needs to be performed. The first sensing responding device 220 or the second sensing responding device 230 may execute a corresponding feedback process based on the trigger type field value. In some embodiments, another reserved value (for example, a value in 10 to 15) of the trigger type field may be further used to indicate a T-LTF extraction frame.

In some embodiments, the sensing initiating device 210 may further send the fourth indication of the truncation ratio by using trigger-based common information (trigger dependent common info) field 820 in the common information field 805 shown in FIG. 8b.

FIG. 8c illustrates an example frame structure of a trigger-based common information field 820 in a common information field 805 of a trigger frame 765 according to some embodiments of this disclosure. In this example, the trigger-based common information field 820 includes a report ratio field 825. A value of the report ratio field 825 is, for example, shown in Table 1 above.

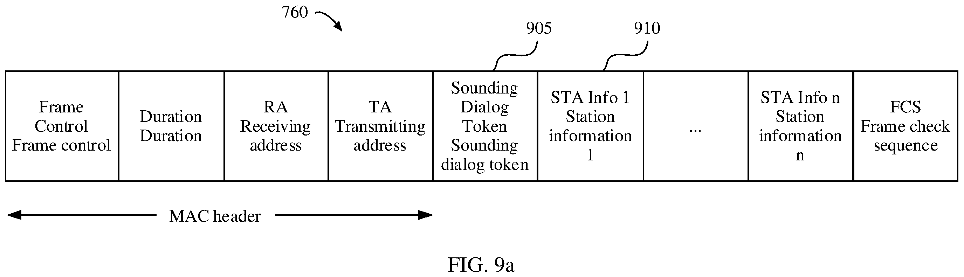

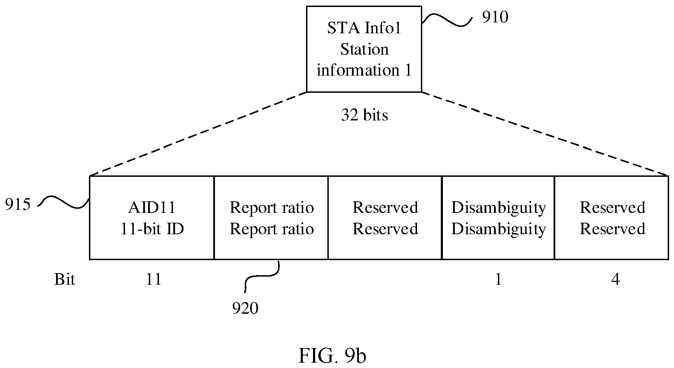

Refer to FIG. 9a and FIG. 9b below. An example implementation of that the sensing initiating device 210 sends a second indication about truncation and feedback to the first sensing responding device 220 or the second sensing responding device 230 by using a null data packet announcement (NDPA) frame 760 in the measurement phase 715 is discussed.

FIG. 9a illustrates an example frame format of an NDPA frame 760 according to some embodiments of this disclosure.

As an example, the second indication of the truncation and feedback of the time domain channel estimation and sensing sequence may be transmitted by using a sounding dialog token (sounding dialog token) field 905 of the NDPA frame 760 or a dedicated information field such as a station information 1 (STA info 1) field 910. The indication may be transmitted by reusing any of the sounding dialog token field 905 and the station information 1 field 910 or designing a new field.

FIG. 9b illustrates an example frame format of a station information 1 field 910 of an NDPA frame 760 according to some embodiments of this disclosure.

In this example, an 11-bit association identifier (AID 11) field 915 in the station information 1 field 910 is used to transmit a second indication of the truncation and feedback of the time domain channel estimation and sensing sequence. The station information 1 field 910 may also include a report ratio (report ratio) field 920.

An existing field of a high efficiency (high efficiency, HE) NDPA frame in the wireless fidelity (Wireless Fidelity, Wi-Fi) 6 standard specification may be reused to transmit an indication associated with truncation and feedback of the time domain channel estimation and sensing sequence. Table 4 shows an example definition of related fields of the HE NDPA frame.

**Table 4**

| Field name | Meaning |
|---|---|
| Sounding dialog token (Sounding dialog token) | Meaning of the first two bits<br>00 VHT NDPA<br>01 HE NDPA<br>10 Ranging NDPA (Ranging NDPA)<br>11 EHTNDPA<br>The first two bits of the sounding dialog token field may be 01, indicating that the NDPA is an HE NDPA, which is implemented based on modification of the HE NDPA. |
| Station information 1 (STA info 1) | Information of the sounding dialog token field may be indicated by using a special AID in the STA info 1 field.<br>For example, if the first two bits of the sounding dialog token field are 01, it indicates that the NDPA is the HE NDPA. In the STA info 1, a special AID (for example, AID = 2045/2046/or another) indicates that the HE NDPA is an HE sensing NDPA, and the field is common information (common info).<br>In this case, if all sensing responding devices use a same report ratio, related information may be exchanged in the "common info" field. |
|  | If the report ratios allocated by sensing responding devices are different, corresponding information may be placed in STA info (2 to N) corresponding to the sensing responding devices.<br>In this case, the STA info 1 may still use a special AID (for example, 2045/2046) to indicate the HE sensing NDPA. A corresponding report ratio is indicated starting from STA info 2.<br>In this case, the AID 11 uses a common AID, and content of the report ratio field is the same as that described above. |

An existing field of a very extremely high (extremely high throughput, EHT) NDPA frame in the Wi-Fi 7 standard specification may also be reused to transmit the indication associated with the truncation and feedback of the time domain channel estimation and sensing sequence. Table 5 shows an example definition of fields in the EHT NDPA frame for sending an indication associated with the truncation and feedback.

**Table 5**

| Field name | Meaning |
|---|---|
| Sounding dialog token (Sounding dialog token) | Meaning of the first two bits<br>00 VHT NDPA<br>01 HE NDPA<br>10 Ranging NDPA (Ranging NDPA)<br>11 EHT NDPA |
| Station information 1 (STA info 1) | Information of the sounding dialog token field may be indicated by using a special AID in the STA info 1 field.<br>For example, the first two bits of the sounding dialog token field are 11, indicating that the NDPA is the EHT NDPA. In the STA info 1, a special AID (for example, AID = 2045/2046) indicates that the EHT NDPA is an EHT sensing NDPA, and the field is common information (common info).<br>In this case, if all sensing responding devices use a same report ratio, related information may be exchanged in the "common info" field. |
| | If the report ratios allocated by sensing responding devices are different, corresponding information may be placed in STA info (2 to N) corresponding to the sensing responding devices.<br>In this case, the STA info 1 may still use the special AID (AID > 2008, and is not equal to 2043/2044/2045, for example, is equal to 2042) to distinguish ranging sensing NDPAs. A corresponding report ratio is indicated starting from STA info 2.<br>In this case, the AID 11 uses a common AID, and content of the report ratio field is the same as that described above. |

In some embodiments, a sensing NDPA frame format based on an 11az ranging NDPA may also be designed. Table 6 below shows an example definition of fields in the sensing NDPA frame for sending an indication associated with the truncation and feedback.

**Table 6**

| Field name | Meaning |
|---|---|
| Sounding dialog token (Sounding dialog token) | Meaning of the first two bits<br>00 VHT NDPA<br>01 HE NDPA<br>10 Ranging NDPA (Ranging NDPA)<br>11 EHT NDPA |
| Station information 1 (STA info 1) | Information of the sounding dialog token field may be indicated by using a special AID in the STA info 1 field.<br>For example, the first two bits of the sounding dialog token field are 10, indicating that the NDPA is the ranging NDPA. In the STA info 1, a special AID (AID > 2008, not equal to 2043/2044/2045, for example, equal to 2042) indicates that the ranging NDPA is a ranging sensing NDPA, and the field is common info.<br>In this case, if all sensing responding devices use a same report ratio, related information may be exchanged in the "common info" field. |
| | If the report ratios allocated by sensing responding devices are different, corresponding information may be placed in STA info (2 to N) corresponding to the sensing responding devices.<br>In this case, the STA info 1 may still use the special AID (AID > 2008, and is not equal to 2043/2044/2045, for example, is equal to 2042) to distinguish ranging sensing NDPAs. Corresponding report ratio is transferred from STA info 2.<br>In this case, the AID 11 uses a common AID, and content of the report ratio field is the same as that described above. |

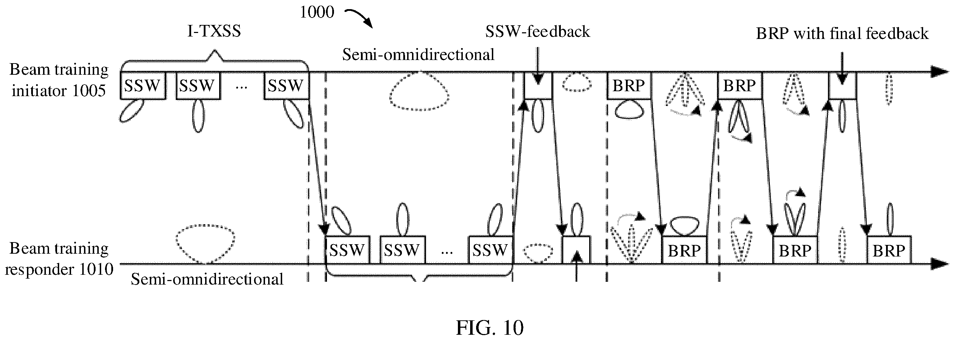

In a high frequency system, such as 60 GHz (for example, 11ad and 11ay), the sensing initiating device 210 may also send a second indication of the truncation and feedback to the first sensing responding device 220 and the second sensing responding device 230 by using a beam refinement protocol (beam refinement protocol, BRP) frame. An existing field in the foregoing frame may be reused for transmission of the second indication, or a new field may be used. The following describes specific embodiments in this aspect with reference to FIG. 10 to FIG. 12.

FIG. 10 illustrates an example process 100 of high frequency beam training according to some embodiments of this disclosure.

As shown in FIG. 10, in a high frequency system, a beam training initiator 1005 and a beam training responder 1010 need to perform beam training. After obtaining a beam coarse scanning direction, the transceivers 1005 and 1010 may use a beam refinement protocol (beam refinement protocol, BRP) to perform beam refinement. In some embodiments, the truncation and feedback of the time domain channel estimation and sensing sequence in the high frequency system may be completed based on the modification of the BRP frame. An example structure of the BRP frame is shown in Table 7 below.

**Table 7**

| Number | Information |
|---|---|
| 1 | Category (Category) |
| 2 | Unprotected directional multi-gigabit (Directional Multi Gigabit, DMG) action (Unprotected DMG action) |
| 3 | Dialog token (Dialog token) |
| 4 | BRP request (BRP request) |
| 5 | DMG beam refinement element (DMG beam refinement element) |
| 6 | Zero or more channel measurement feedback elements (Zero or more channel measurement feedback elements) |
| 7 | Enhanced beam tracking element (Enhanced beam tracking element) |
| 8 | Sector sweep frame (sector sweep frame, SSW) report element (SSW report element) |
| 9 | EDMG partial sector-level sweep element (EDMG partial sector level sweep element) (optional) |
| 10 | EDMG BRP request element (EDMG BRP request element) (optional) |
| 11 | Zero or more EDMG channel measurement feedback elements (Zero or more EDMG channel measurement feedback elements) |

In some embodiments, a reserved bit of a BRP request (BRP request) field whose number is 4 in a BRP frame may be used to meet a requirement for performing truncating feedback of a channel estimation sequence.

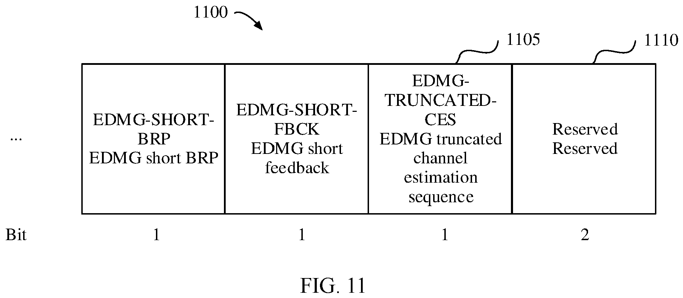

FIG. 11 illustrates an example structure of a BRP request field 1100 according to some embodiments of this disclosure.

As shown in FIG. 11, a reserved bit of a conventional BRP request field is set to an EDMG truncated channel estimation sequence (EDMG-TRUNCATED-CEF) field 1105, used to indicate truncation and feedback of a time domain sensing channel. In this way, the reserved (reserved) field 1110 has 2 bits remaining. When the value of the EDMG-TUNCATED-CEF field 1105 is 1, it may indicate that time domain sampling of the truncated channel estimation sequence is required for feedback. When the value of the EDMG-TUNCATED-CEF field 1105 is 0, it indicates that the time domain sampling of the truncated channel estimation sequence is not required for feedback.

In some other embodiments, a DMG beam refinement element (DMG beam refinement element) field numbered 5 in the BRP frame may be utilized to indicate the truncation and feedback.

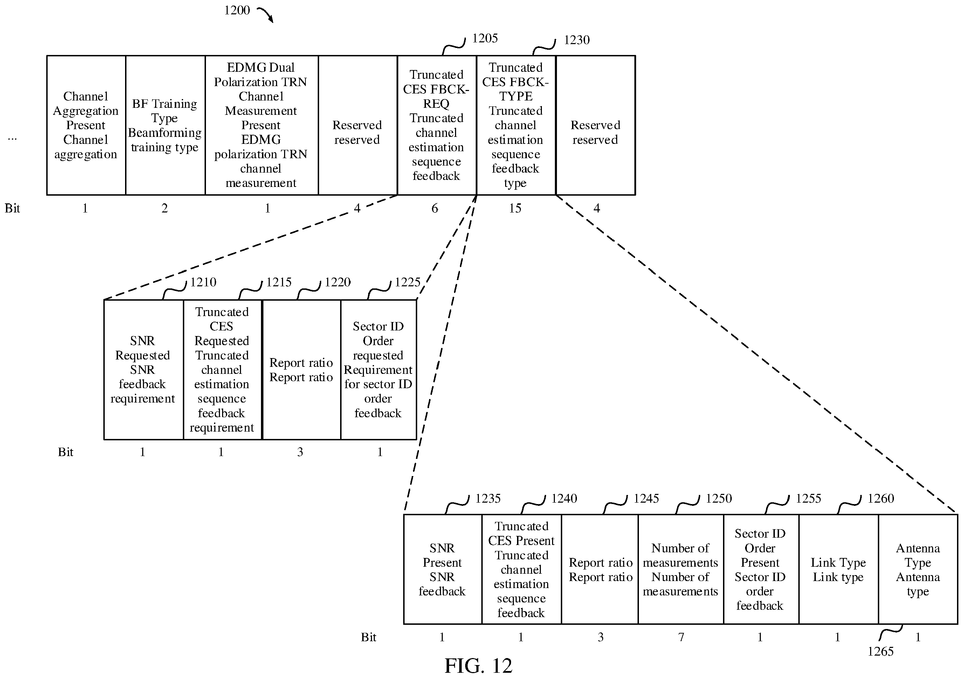

FIG. 12 illustrates an example structure of a DMG beam refinement element field 1200 according to some embodiments of this disclosure.

As shown in FIG. 12, in some embodiments, a truncated channel estimation sequence feedback (truncated CEF FBCK-REQ) field 1205 of the DMG beam refinement element field 1200 may indicate truncation and feedback of the time domain channel estimation and sensing sequence. The truncated channel estimation sequence feedback field 1205 may include a signal-to-noise ratio (signal to noise ratio, SNR) feedback requirement (SNR requested) subfield (subfield) 1210, a truncated channel estimation sequence feedback requirement (truncated CEF requested) subfield 1215, a report ratio (report ratio) subfield 1220, and a sector identifier (ID) order feedback requirement (sector ID order requested) subfield 1225. Meanings of the subfields are shown in Table 8 below.

**Table 8**

| Subfield | Meaning |
|---|---|
| SNR Requested<br><br>SNR feedback requirement | If a value is set to 1, an SNR subfield (subfield) is required to be included in the feedback sensing feedback element (sensing feedback element). Otherwise, the value is set to 0. |
| Truncated CEF requested<br><br>Truncated channel estimation sequence feedback requirement | If a value is set to 1, a truncated channel estimation sequence subfield (truncated channel estimation subfield) is required to be included in a feedback sensing feedback element. Otherwise, the value is set to 0. |
| Report ratio<br>Report ratio | Truncation ratio when a truncated channel estimation subfield is fed back<br>001 1/8<br>010 2/8<br>... |
| Sector ID order requested<br><br>Requirement for sector ID order feedback | If a value set to 1, a sector ID order subfield (sector ID order subfield) is required to be included in the feedback sensing feedback element. Otherwise, the value is set to 0. |

In some other embodiments, a truncated channel estimation sequence feedback type (truncated CEF FBCK-TYPE) field 1230 of the DMG beam refinement element field 1200 may indicate truncation and feedback of the time domain channel estimation and sensing sequence. As shown in FIG. 12, the truncated CEF FBCK-TYPE field 1230 includes an SNR present feedback (SNR present) subfield 1235, a truncated channel estimation sequence feedback (truncated CEF present) subfield 1240, a report ratio (report ratio) subfield 1245, a number of measurements (number of measurements) subfield 1250, a sector ID order feedback (sector ID order present) subfield 1255, a link type (link type) subfield 1260, and an antenna type (antenna type) subfield 1265. Meanings of the subfields are shown in Table 9 below.

**Table 9**

| Subfield | Meaning |
|---|---|
| SNR present<br><br>SNR feedback | If a value is set to 1, the feedback sensing feedback element includes an SNR subfield.<br>Otherwise, the value is set to 0. |
| Truncated CEF present<br>Truncated channel estimation sequence feedback | If a value is set to 1, the fed back sensing feedback element includes the truncated channel estimation subfield. Otherwise, the value is set to 0. |
| Report ratio<br>Report ratio | Truncation ratio when a truncated channel estimation subfield is fed back<br>001 1/8<br>010 2/8<br>... |
| Number of measurements<br>Number of measurements | It indicates a number of measurements included in the SNR subfield and the truncated channel estimation subfield, which is equivalent to a number of TRN-T subfields in a BRP-TX frame used for measurement, or equivalent to a number of received angle sectors when a TXSS-FBCK-REQ subfield is set to 1 to return a TXSS result. |
| Sector ID order present<br><br><br>Sector ID order feedback | When a value is set to 1, it indicates that the sector ID order subfield is included in a long distance sensing feedback element (long distance sensing feedback element).<br>Otherwise, the value is set to 0. |
| Link type<br>Link type | A value 0 indicates an initiator, and a value 1 indicates a receiver. |

(continued)

| Subfield | Meaning |
|---|---|
| Antenna type Antenna type | A value 0 indicates a transmit antenna, and a value 1 indicates a receive antenna. |
| Number of beams Quantity of beams | It indicates a quantity of beams in the sector ID order subfield, which is used in a multi-sector identification and capturing (MIDC) subfield. |

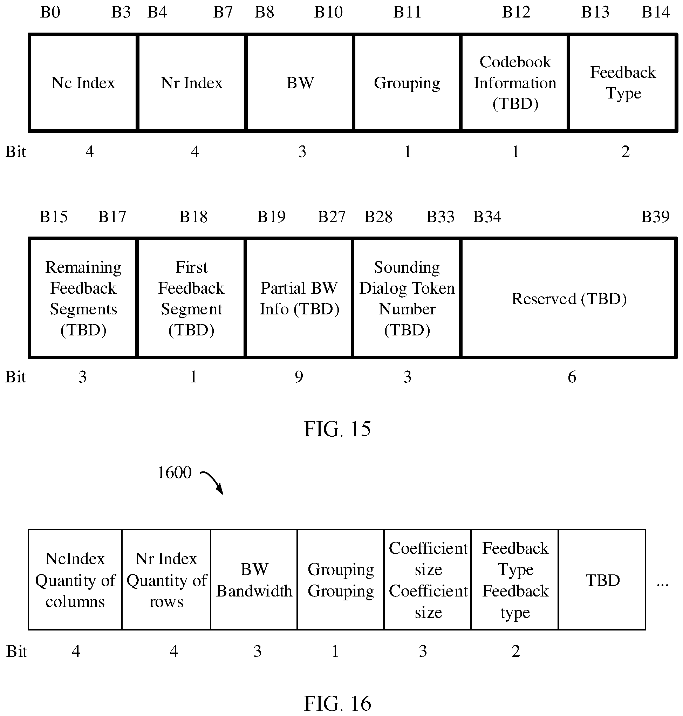

The first sensing responding device 220 may perform truncation and feedback accordingly after receiving the second indication about the truncation and feedback of the time domain channel estimation and sensing sequence from the sensing initiating device 210. Specific processing of the truncation and feedback of the first sensing responding device 220 is discussed below with reference to FIG. 16.

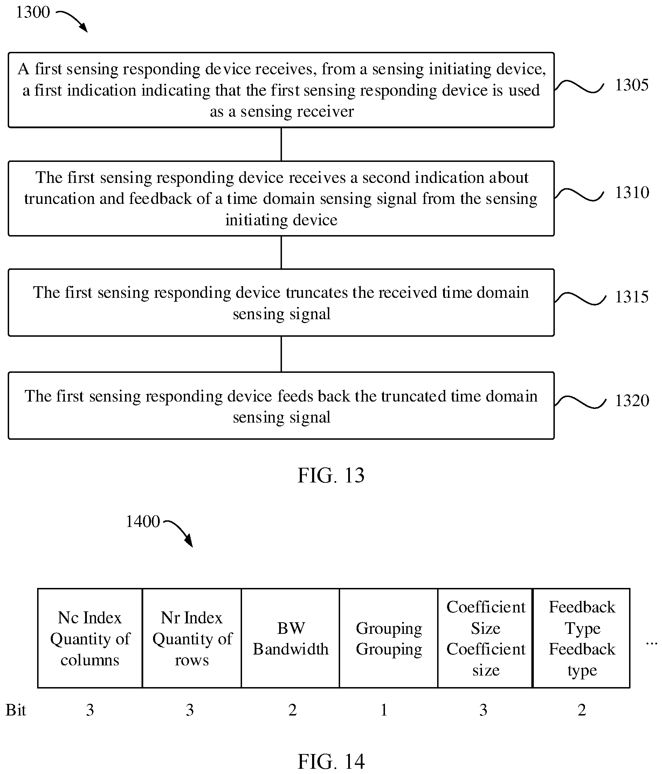

FIG. 13 illustrates a flowchart of a truncation and feedback method 1300 of a time domain channel estimation and sensing sequence at a first sensing responding device 220 according to some embodiments of this disclosure.

As shown in FIG. 13, in a block 1305, the first sensing responding device 220 receives, from a sensing initiating device 210, a first indication indicating that the first sensing responding device 220 is used as a sensing receiver. In a block 1310, the first sensing responding device 220 receives a second indication about truncation and feedback of the time domain channel estimation and sensing sequence from the sensing initiating device 210. The implementation and transmission manner of the first indication and the second indication described above with reference to FIG. 6 to FIG. 15 may be used. Details are not described again.

In a block 1315, the first sensing responding device 220 truncates the received time domain channel estimation and sensing sequence. In the embodiment in which the first sensing responding device 220 receives, from the sensing initiating device 210, a fourth indication of a truncation ratio, the first sensing responding device 220 may truncate the time domain channel estimation and sensing sequence based on the truncation ratio. When the time domain channel estimation and sensing sequence includes a cyclic prefix (CP), the first sensing responding device 220 may avoid the CP as much as possible during truncation, for example, not starting from a leftmost side of a signal, but starting from a middle position of the signal, to exclude the CP, thereby further improving efficiency of channel estimation.

For example, in an embodiment in which a low frequency domain LTF sequence is a sequence for channel estimation (which may also be used for sensing in 11bf), when sending, a sensing sender needs to perform inverse Fourier transform on the frequency domain LTF sequence, and transform the sequence to a time domain for sending. Correspondingly, after receiving a time domain LTF sequence, the first sensing responding device 220 as a sensing receiver performs CP removal and truncation processing on the time domain LTF sequence (that is, performs feedback by taking a part of the time domain LTF sequence).

In an embodiment in which a high frequency channel estimation field (CEF) sequence is a sequence for channel estimation (which may also be used for sensing in 11bf), the high frequency channel estimation field (CEF) sequence is a time domain sequence in 11ad. Correspondingly, after receiving the time domain CEF, the first sensing responding device 220 performs CP removal and truncation processing on the time domain CEF (that is, performs feedback by taking a part of the time domain CEF sequence).

In a block 1320, the first sensing responding device 220 feeds back the truncated time domain channel estimation and sensing sequence. In some embodiments, the first sensing responding device 220 may send the truncated time domain channel estimation and sensing sequence to the sensing initiating device 210, so that the sensing initiating device 210 may perform channel estimation based on the received truncated time domain channel estimation and sensing sequence. In this case, the sensing initiating device 210 may be used as a sender of a sensing signal. Alternatively, the sensing initiating device 210 may not be used as a sender of the channel estimation and sensing sequence, but as an executor of channel estimation.

In the embodiment in which the first sensing responding device 220 receives the channel estimation and sensing sequence from the second sensing responding device 230, the first sensing responding device 220 may send the truncated time domain channel estimation and sensing sequence to the second sensing responding device 230, so that the second sensing responding device 230 may perform channel estimation based on the truncated time domain channel estimation and sensing sequence. Similarly, in some embodiments, the second sensing responding device 230 may not be used as the sender of the sensing signal, but be used as the executor of channel estimation.

In some embodiments, a dedicated frame may also be designed for the first sensing responding device 220 to perform truncation and feedback. In some embodiments, a new type T-LTF may be added to an HE action field by using a reserved bit of the HE action field (HE action field), as shown in Table 10.

**Table 10**

| Value | Meaning |
|---|---|
| 0 | HE compressed beamforming/CQI (HE compressed beamforming/CQI) |
| 1 | Quiet time period (Quiet time period) |
| 2 | OPS |
| 3 | PDP |
| 4 | T-LTF |
| 5 to 255 | Reserved (Reserved) |

As shown in Table 10, if a value of the HE action field is 4, it indicates that the frame is a T-LTF frame, and the T-LTF frame carries related truncation and feedback information. In this example, in addition to truncation and feedback, PDP data feedback is also supported. As shown in Table 10, if the value of the HE action field is 3, it indicates that PDP data feedback needs to be performed.

In some other embodiments, the PDP data feedback may not be used. Table 11 shows example values of the HE action field in this case.

**Table 11**

| Value | Meaning |
|---|---|
| 0 | HE compressed beamforming/CQI (HE compressed beamforming/CQI) |
| 1 | Quiet time period (Quiet time period) |
| 2 | OPS |
| 3 | T-LTF |
| 4 to 255 | Reserved (Reserved) |

As shown in Table 11, in this case, if a value of the HE Action field is 3, it indicates that truncation and feedback of the time domain channel estimation and sensing sequence need to be performed.

Table 12 shows an example value of an action field of the HE T-LTF frame.

**Table 12**

| Value | Meaning |
|---|---|
| 1 | Category (Category) |
| 2 | HE action (HE action) |
| 3 | HE MIMO control (HE MIMO control) |
| 5 | HE T-LTF report (HE T-LTF report) |

As shown in Table 12, when a value of the action field of the HE T-LTF frame is 3, it indicates that the frame carries HE MIMO control information. When a value of the action field of the HE T-LTF frame is 5, it indicates that the frame carries the HE T-LTF report, which is used by the first sensing responding device 220 to feed back the truncated time domain channel estimation and sensing sequence.

The HE MIMO control field may be designed based on an existing HE frame structure. The HE MIMO control field may include an indication for at least one of a quantity of columns, a quantity of rows, or a quantity of quantization bits of a matrix element of a to-be-fed-back T-LTF matrix, and some fields in the field are set to reserved (reserved). FIG. 14 illustrates an example frame structure of an HE MIMO control field 1400 according to some embodiments of this disclosure, where meanings of the fields are shown in Table 13 below.

**Table 13 HE MIMO control in an HE T-LTF frame**

| Field | Meaning |
|---|---|
| Nc index (Nc index) (3 bits) | It indicates a quantity of columns of the T-LTF matrix minus 1. In the T-LTF matrix, Nc corresponds to a feedback length on a single antenna, and corresponds to a length of a received time domain LTF multiplied by a report ratio. |
| Nr index (Nr index) (3 bits) | It indicates a quantity of rows of the T-LTF matrix minus 1. In the T-LTF matrix, Nr corresponds to a quantity of receive channels on a receive side. |
| Bandwidth (BW) (2 bits) | A meaning is the same as a field corresponding to conventional HE MIMO control. |
| Grouping (Grouping) (1 bit) | Reserved (Reserved) |
| Codebook information/Coefficient size (Codebook information/ Coefficient size) (3 bits) | 0, quantization bit Nb = 4<br>1, quantization bit Nb = 5<br>2, quantization bit Nb = 6<br>3, quantization bit Nb = 8<br>4 to 7, reserved (reserved)<br>As a measurement bandwidth increases, used quantization bits may continue to increase accordingly. |
| Feedback type (Feedback type) (2 bits) | Reserved (Reserved) |
| ... | A meaning is the same as a field corresponding to conventional HE MIMO control. |

In some embodiments, a new type T-LTF may be added to an EHT action field by using a reserved bit of the EHT action field (EHT action field), as shown in Table 14.

**Table 14**

| Value | Meaning |
|---|---|
| 0 | EHT compressed beamforming/CQI (EHT compressed beamforming/CQI) |
| 1 | PDP |
| 2 | T-LTF |
| 3 to 255 | Reserved (Reserved) |

As shown in Table 14, if a value of the EHT action field is 2, it indicates that the frame is a T-LTF frame and carries related truncation and feedback information. In this example, in addition to truncation and feedback, PDP data feedback is also supported. As shown in Table 14, if a value of the EHT action field is 1, it indicates that PDP data feedback is required.

In some embodiments, the PDP data feedback may not be used. Table 15 shows example values of the EHT action field in this case.

**Table 15**

| Value | Meaning |
|---|---|
| 0 | EHT compressed beamforming/CQI (EHT compressed beamforming/CQI) |
| 1 | T-LTF |
| 2 to 255 | Reserved (Reserved) |

In the example shown in Table 15, if a value of the EHT action field is 1, it indicates that truncation and feedback of the time domain channel estimation and sensing sequence need to be performed.

Table 16 shows an example value of an action field of the EHT T-LTF frame.

**Table 16**

| Value | Meaning |
|---|---|
| 1 | Category (Category) |
| 2 | EHT action (EHT action) |
| 3 | EHT MIMO control (EHT MIMO control) |
| 4 | EHT T-LTF report (EHT T-LTF report) |

As shown in Table 16, when a value of the action field of the EHT T-LTF frame is 3, it indicates that the frame carries EHT MIMO control information. When a value of the action field of the EHT T-LTF frame is 4, it indicates that the frame carries the EHT T-LTF report information, which is used by the first sensing responding device 220 to feed back the truncated time domain channel estimation and sensing sequence.

The EHT MIMO control field may be designed based on an existing EHT frame structure, as shown in FIG. 15. The EHT MIMO control field may include an indication for at least one of a quantity of columns, a quantity of rows, or a quantity of quantization bits of a matrix element of a to-be-fed-back T-LTF matrix, and some fields in the field may be set to reserved (reserved).

FIG. 16 illustrates an example frame structure of an EHT MIMO control field 1600 according to some embodiments of this disclosure, where meanings of the fields are shown in Table 17 below.

**Table 17**

| Field | Meaning |
|---|---|
| Nc index (Nc index) (4 bits) Quantity of columns | It indicates a quantity of columns of the T-LTF matrix minus 1. In a PDP matrix, Nc corresponds to a feedback length on a single antenna, and corresponds to a length of a time domain LTF signal multiplied by a report ratio. |
| Nr index (Nr index) (4 bits) Quantity of rows | It indicates a quantity of rows of the T-LTF matrix minus 1. In the PDP matrix, Nr corresponds to a quantity of receive channels on a receive side. |
| Bandwidth (BW) (3 bits) | A meaning is the same as a field corresponding to conventional EHT MIMO control. |
| Grouping (Grouping) | Reserved (Reserved) |
| Codebook information/Coefficient size (Codebook information/Coefficient size) (3 bits) | 0, quantization bit Nb = 4<br>1, quantization bit Nb = 5<br>2, quantization bit Nb = 6<br>3, quantization bit Nb = 8<br>4 to 7, reserved (reserved)<br>As the measurement bandwidth increases, used quantization bits may continue to increase accordingly. |
| Feedback type (Feedback type) | Reserved (Reserved) |
| ... | To be designed (TBD) |

The following describes an example process in which the first sensing responding device 220 feeds back the truncated time domain channel estimation and sensing sequence in a MIMO scenario. In this example, the LTF sequence is used as a frequency domain sensing signal. When performing signal estimation, the first sensing responding device 220 truncates, based on the report ratio, the time domain signal of the LTF of each flow that is obtained through solving, and then feeds back corresponding complex data. For example, a specific quantity of feedback points L = a report ratio * a quantity of time domain LTF points.

In this way, a dimension of a T-LTF matrix that needs to be fed back may be represented as $N_{STS} \times Nr \times L$,

where $N_{STS}$ represents a quantity of space flows, Nr represents a quantity of connected channels of a receive end, and L represents a length of data that needs to be fed back on each flow and each receiving link. A format of the feedback data is encoded as follows:

Each space-time flow (1, ..., $N_{STS}$, total $N_{STS}$) includes the following information:

{A feedback matrix amplitude is 3 bits, and the feedback matrix includes Nr (1, ..., Nr in total) rows, where each row includes the following information:

{L (1, ..., L in total) complex numbers are included, and for each complex number, quantization transmission is performed based on a real part (Nb bits) and an estimated part (Nb bits). } }

Nb may correspond to the codebook information/coefficient size field (3 bits) in the HE MIMO control field shown in Table 13.

The first sensing responding device 220 may feed back the truncated time domain channel estimation and sensing sequence by using T-LTF report information. The following Table 18 shows specific HE T-LTF report information.

**Table 18 HE T-LTF report information**

| Field | Size (bit) | Meaning |
|---|---|---|
| SNR in a receiving channel 1 | 8 | Signal-to-noise ratio in a first receiving channel of the device that sends the report |
| ... | ... | ... |
| SNR in a receiving channel Nr | 8 | Signal-to-noise ratio in an Nr[th] receiving channel of the device that sends the report |
| T-LTF matrix for a space-time flow 1 | $2 \times Nb \times L \times Nr$ | T-LTF matrix |
| ... | ... | ... |
| T-LTF matrix for a space-time flow $N_{STS}$ | $2 \times Nb \times L \times Nr$ | T-LTF matrix |

The following Table 19 shows specific EHT T-LTF report information.

**Table 19 EHT T-LTF report information**

| Field | Size (bit) | Meaning |
|---|---|---|
| SNR in a receiving channel 1 | 8 | Signal-to-noise ratio in a first receiving channel of the device that sends the report |
| ... | ... | ... |
| SNR in a receiving channel Nr | 8 | Signal-to-noise ratio in an Nr[th] receiving channel of the device that sends the report |
| T-LTF matrix for a space-time flow 1 | $2 \times Nb \times L \times Nr$ | T-LTF matrix |
| ... | ... | ... |
| T-LTF matrix for a space-time flow $N_{STS}$ | $2 \times Nb \times L \times Nr$ | T-LTF matrix |

In Table 18 and Table 19, Nb represents a quantization bit, L = a report ratio * a quantity of time domain LTF points, Nr represents a quantity of receiving channels of a receiver/a device that sends a report, and NSTS represents a quantity of space-time flows.

In a high frequency system, in an embodiment where the sensing initiating device 210 uses a BRP request field or a directional multi-gigabit (DMG) beam adjustment element field in the BRP frame to indicate that feedback needs to be performed on the time domain channel estimation and sensing sequence, the first sensing responding device may feed back the truncated time domain channel estimation and sensing sequence by using a sensing feedback element (sensing feedback element) field. The following Table 20 shows specific information of the sensing feedback element field.

**Table 20 Meaning of a field in the sensing feedback element**

| Field | Size | | | Meaning |
|---|---|---|---|---|
| Element ID (Element ID) | It is the same as a corresponding field in the channel measurement feedback element (channel measurement feedback element). | | | |
| Length (Length) | It is the same as that of the corresponding field in the channel measurement feedback element. | | | |
| Signal-to-noise ratio (SNR) | It is the same as that of the corresponding field in the channel measurement feedback element. | | | |
| Truncated channel estimation sequence (Truncated CEF) | Measurement 1 | Each receive antenna of each flow: 16-bit (I/Q) × a feedback length L. The feedback length L is calculated based on a time domain sampling length × a report ratio. | | First truncation of a time domain sequence of a received first sending training field (TRN-T field). |
| | Measurement 2 | Each receive antenna of each flow: 16-bit (I/Q) × a feedback length L. The feedback length L is calculated based on a time domain sampling length × a report ratio. | | First truncation of a time domain sequence of a received first TRN-T field. |
| | ... | | | |
| | Measure Nmeas | Each receive antenna of each flow: 16-bit (I/Q) × a feedback length L. The feedback length L is calculated based on a time domain sampling length × a report ratio. | | First truncation of a time domain sequence of a received first TRN-T field. |
| Sector ID order (Sector ID Order) | It is the same as that of the corresponding field in the channel measurement feedback element. | | | |
| Additional SNR (Additional SNR) | It is the same as that of the corresponding field in the channel measurement feedback element. | | | |
| Additional truncated channel estimation sequence (Additional truncated CEF) | It is the same as that of the truncated channel estimation sequence (truncated CEF) in the table. | | | |

It should be understood that the operations and features described above with reference to FIG. 2 to FIG. 12 are also applicable to the method 1300, and have a same effect. Details are not described again.

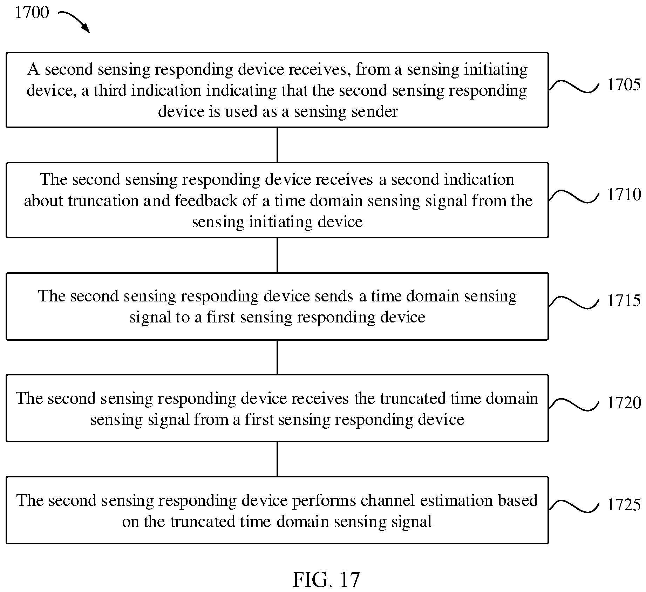

As described above, in the embodiment where the first sensing responding device 220 is a sensing receiver and the second sensing responding device 230 is a sensing sender, the first sensing responding device 220 may send the truncated time domain channel estimation and sensing sequence to the second sensing responding device 230. Then, the second sensing responding device 230 may perform channel estimation and target sensing based on the truncated time domain channel estimation and sensing sequence. The following describes a specific processing process of the second sensing responding device 230 with reference to FIG. 17.

FIG. 17 illustrates a flow chart of a channel estimation method 1700 performed at a second sensing responding device 230 as a sensing sender according to some embodiments of this disclosure.

As shown in FIG. 17, in a block 1705, the second sensing responding device 230 receives, from a sensing initiating device 210, a third indication indicating that the second sensing responding device 230 is used as a sensing sender. In a block 1710, the second sensing responding device 230 receives a second indication about truncation and feedback of the time domain channel estimation and sensing sequence from the sensing initiating device 210. In a block 1715, the second sensing responding device 230 sends the time domain channel estimation and sensing sequence to a first sensing responding device 220. In a block 1720, the second sensing responding device 230 receives the truncated time domain channel estimation and sensing sequence from the first sensing responding device 220. The implementation and transmission manners of the second indication and the third indication, the implementation and transmission manners of the channel estimation and sensing sequence, and the implementation of the truncation and feedback described with reference to FIG. 6 to FIG. 16 may be used. Details are not described again.

In a block 1725, the second sensing responding device 230 performs channel estimation based on the truncated time domain channel estimation and sensing sequence. Any currently known and future channel estimation methods may be used herein, and the scope of the disclosure is not limited in this aspect.

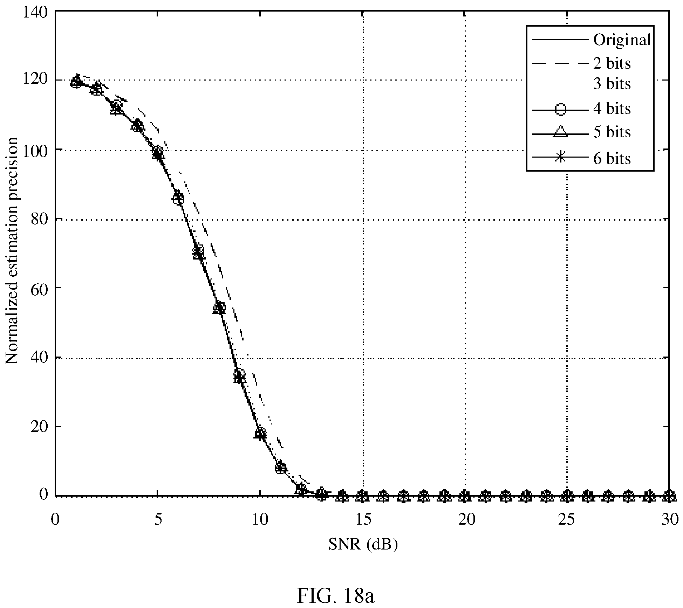

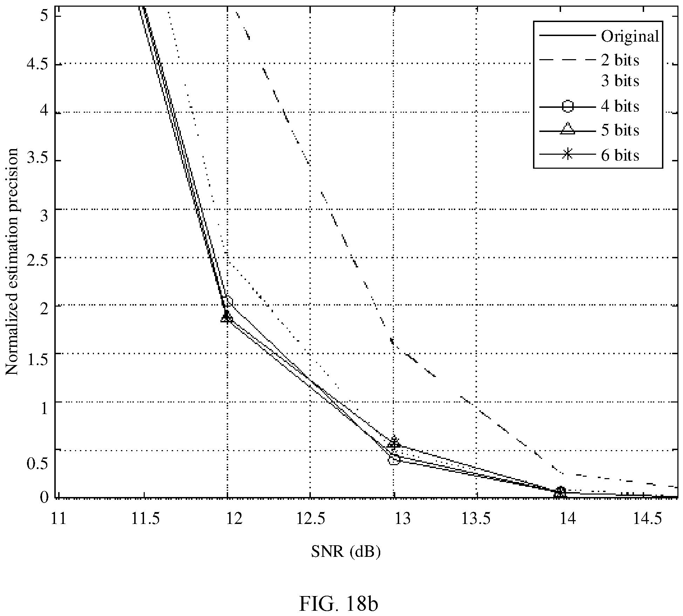

FIG. 18a and 18b illustrate a channel estimation result based on a time domain LTF sequence with a truncation ratio of 4/8 according to some embodiments of this disclosure. FIG. 18b is a local magnification of FIG. 18a.

In FIG. 18a and FIG. 18b, a horizontal axis is an SNR, and a vertical axis is a normalized parameter estimation precision. As shown in FIG. 18a, on the whole, as the SNR increases, the estimation precision is also correspondingly improved. During quantization, quantization bits of a same length are used for a real part/an imaginary part. As shown in FIG. 18a and FIG. 18b, when more than four quantization bits are used for the real part/the imaginary part, the estimation precision is no longer significantly improved. Therefore, in some embodiments, the quantity of quantized bits described in Table 13 is used, so that feedback overheads are further reduced and feedback efficiency is improved while channel estimation is ensured.

It should be understood that the operations and features described above with reference to FIG. 2 to FIG. 16 are also applicable to the method 1700, and have a same effect. Details are not described again.

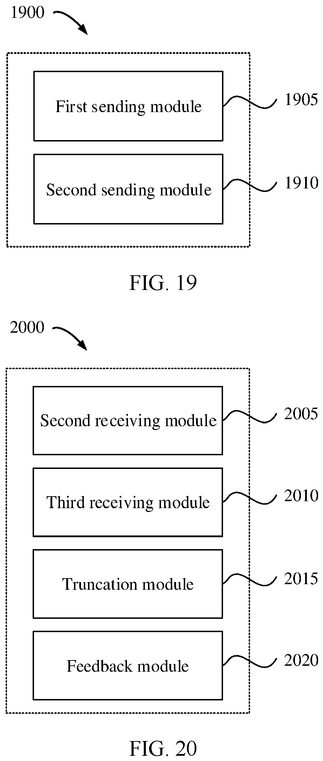

An embodiment of this disclosure further provides a corresponding apparatus for implementing the foregoing method or process. FIG. 19 illustrates a schematic block diagram of a structure of an apparatus 1900 implemented at a sensing initiating device 210 according to some embodiments of this disclosure.

As shown in FIG. 19, the apparatus 1900 includes: a first sending module 1905, configured to send, to a first sensing responding device 220 by using the sensing initiating device 210, a first indication indicating that the first sensing responding device 220 is used as a sensing receiver; and a second sending module 1910, configured to send, by using the sensing initiating device 210, a second indication to the first sensing responding device 220, where the second indication indicates the first sensing responding device 220 to feed back a truncated time domain channel estimation and sensing sequence.

In some embodiments, the apparatus 1900 further includes: a first receiving module, configured to receive, from the first sensing responding device 220 by using the sensing initiating device 210, the truncated time domain channel estimation and sensing sequence; and a first channel estimation module, configured to perform, by using the sensing initiating device 210, channel estimation and target sensing based on the truncated time domain channel estimation and sensing sequence.

In some embodiments, the truncated time domain channel estimation and sensing sequence fed back by the first sensing responding device 220 is a part of a time domain LTF sequence received by the first sensing responding device 220. The first receiving module is configured to receive, by using the sensing initiating device 210, the truncated time domain channel estimation and sensing sequence from the first sensing responding device 220 by using a T-LTF frame.

In some embodiments, the truncated time domain channel estimation and sensing sequence fed back by the first sensing responding device 220 is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some embodiments, the truncated time domain channel estimation and sensing sequence fed back by the first sensing responding device 220 is a part of a time domain CEF sequence received by the first sensing responding device 220. The first receiving module is configured to receive, by using the sensing initiating device 210, the truncated time domain channel estimation and sensing sequence from the first sensing responding device 220 by using a sensing feedback element field.

In some embodiments, the apparatus 1900 further includes a third sending module, configured to send, to a second sensing responding device 230 by using the sensing initiating device 210, a third indication indicating that the second sensing responding device 230 is used as a sensing sender. The second sending module is further configured to send a second indication to the second sensing responding device 230, where the second indication further indicates the second sensing responding device 230 to perform channel estimation and target sensing based on the truncated time domain channel estimation and sensing sequence fed back by the first sensing responding device 220.

In some embodiments, the apparatus 1900 further includes: a fourth sending module, configured to send a fourth indication about a truncation ratio of the time domain channel estimation and sensing sequence to the first sensing responding device 220 by using the sensing initiating device 210.

In some embodiments, the first sending module 1905 is configured to send, by using the sensing initiating device 210, the second indication to the first sensing responding device 220 by using at least one of an announcement frame, a trigger frame, a null data packet announcement (NDPA) frame, or a beam refinement protocol (BRP) frame.

In some embodiments, a common information field or a dedicated information field in the trigger frame indicates performing truncation and feedback on the time domain channel estimation and sensing sequence. In some embodiments, a trigger type field included in the common information field in the trigger frame indicates performing truncation and feedback on the time domain channel estimation and sensing sequence. In some embodiments, a sounding dialog token field or a dedicated information field in the NDPA frame indicates performing truncation and feedback on the time domain channel estimation and sensing sequence. In some embodiments, an association identifier (AID) field included in the dedicated information field in the NDPA frame indicates performing truncation and feedback on the time domain channel estimation and sensing sequence. In some embodiments, a BRP request field or a directional multi-gigabit (DMG) beam adjustment element field in the BRP frame indicates performing truncation and feedback on the time domain channel estimation and sensing sequence.

FIG. 20 illustrates a schematic block diagram of a structure of an apparatus 2000 implemented at a first sensing responding device 220 according to some embodiments of this disclosure.

As shown in FIG. 20, the apparatus 2000 includes: a second receiving module 2005, configured to receive, from a sensing initiating device 210 by using a first sensing responding device 220, a first indication indicating that the first sensing responding device 220 is used as a sensing receiver; a third receiving module 2010, configured to receive, from the sensing initiating device 210 by using the first sensing responding device 220, a second indication, where the second indication indicates the first sensing responding device to feed back a truncated time domain channel estimation and sensing sequence; a truncation module 2015, configured to truncate the received time domain channel estimation and sensing sequence by using the first sensing responding device 220; and a feedback module 2020, configured to feed back the truncated time domain channel estimation and sensing sequence by using the first sensing responding device 220.

In some embodiments, the apparatus 2000 further includes a fourth receiving module, configured to receive, from the sensing initiating device by using the first sensing responding device 220, a fourth indication about a truncation ratio of the time domain channel estimation and sensing sequence. In these embodiments, the truncation module 2015 is configured to truncate the time domain channel estimation and sensing sequence based on the truncation ratio and by using the first sensing responding device 220. In some embodiments, the time domain channel estimation and sensing sequence includes a cyclic prefix CP. The truncated time domain channel estimation and sensing sequence excludes the CP.

In some embodiments, the feedback module 2020 is configured to send the truncated time domain channel estimation and sensing sequence to the sensing initiating device 210 by using the first sensing responding device 220. In some embodiments, the time domain channel estimation and sensing sequence is received by the first sensing responding device 210 from the second sensing responding device 220. In these embodiments, the feedback module 2020 is configured to send the truncated time domain channel estimation and sensing sequence to the second sensing responding device 230 by using the first sensing responding device 220.

In some embodiments, the third receiving module 2010 is configured to: receive, by using the first sensing responding device 220, the second indication from the sensing initiating device 210 by using at least one of an announcement frame, a trigger frame, an NDPA frame, or a BRP frame.

In some embodiments, a common information field or a dedicated information field in the trigger frame indicates performing truncation and feedback on the time domain channel estimation and sensing sequence. In some embodiments, a trigger type field included in the common information field in the trigger frame indicates performing truncation and feedback on the time domain channel estimation and sensing sequence. In some embodiments, a sounding dialog token field or a dedicated information field in the NDPA frame indicates performing truncation and feedback on the time domain channel estimation and sensing sequence. In some embodiments, an AID field included in the dedicated information field in the NDPA frame indicates performing truncation and feedback on the time domain channel estimation and sensing sequence.

In some embodiments, the truncated time domain channel estimation and sensing sequence is a part of a time domain LTF sequence received by the first sensing responding device 220. The feedback module 2020 is configured to feed back, by using the first sensing responding device 220, the truncated time domain channel estimation and sensing sequence by using the T-LTF frame.

In some embodiments, the truncated time domain channel estimation and sensing sequence fed back by the first sensing responding device 220 is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some embodiments, a BRP request field or a DMG beam adjustment element field in the BRP frame indicates performing truncation and feedback on the time domain channel estimation and sensing sequence. In some embodiments, the truncated time domain channel estimation and sensing sequence is a part of a time domain CEF sequence received by the first sensing responding device 220. The feedback module 2020 is configured to feed back, by using the first sensing responding device 220, the truncated time domain channel estimation and sensing sequence by using a sensing feedback element field.

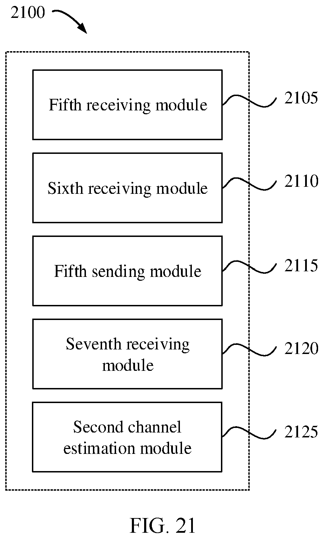

FIG. 21 illustrates a schematic block diagram of a structure of an apparatus 2100 implemented at a second sensing responding device 230 according to some embodiments of this disclosure.

As shown in FIG. 21, the apparatus 2000 includes: a fifth receiving module 2105, configured to receive, from a sensing initiating device 210 by using a second sensing responding device 230, a third indication indicating that the second sensing responding device 230 is used as a sensing sender; a sixth receiving module 2110, configured to receive, from the sensing initiating device 210 by using the second sensing responding device 230, a second indication, where the second indication indicates the second sensing responding device 230 to perform channel estimation and target sensing based on a truncated time domain channel estimation and sensing sequence fed back by a first sensing responding device 220; a fifth sending module 2115, configured to send the time domain channel estimation and sensing sequence to the first sensing responding device 220 by using the second sensing responding device 230; a seventh receiving module 2120, configured to receive the truncated time domain channel estimation and sensing sequence from the first sensing responding device 220 by using the second sensing responding device 230; and a second channel estimation module 2125, configured to perform channel estimation and target sensing based on the truncated time domain channel estimation and sensing sequence by using the second sensing responding device 230.

In some embodiments, the sixth receiving module 2110 is configured to receive, by using the second sensing responding device 230, the second indication from the sensing initiating device 210 by using at least one of an announcement frame, a trigger frame, an NDPA frame, or a BRP frame.

In some embodiments, a common information field or a dedicated information field in the trigger frame indicates performing truncation and feedback on the time domain channel estimation and sensing sequence. In some embodiments, a trigger type field included in the common information field in the trigger frame indicates performing truncation and feedback on the time domain channel estimation and sensing sequence. In some embodiments, a sounding dialog token field or a dedicated information field in the NDPA frame indicates performing truncation and feedback on the time domain channel estimation and sensing sequence. In some embodiments, an AID field included in the dedicated information field in the NDPA frame indicates performing truncation and feedback on the time domain channel estimation and sensing sequence.

In some embodiments, the time domain channel estimation and sensing sequence sent by the second sensing responding device 230 includes a time domain LTF sequence. The seventh receiving module 2120 is configured to receive, by using the second sensing responding device 230, the truncated time domain channel estimation and sensing sequence from the first sensing responding device 220 by using a T-LTF frame.

In some embodiments, the truncated time domain channel estimation and sensing sequence received by the second sensing responding device 230 is represented by a T-LTF matrix. The T-LTF frame includes a MIMO control field, and the MIMO control field includes an indication for at least one of a quantity of columns, a quantity of rows, or a quantity of quantization bits of a matrix element of the T-LTF matrix.

In some embodiments, a BRP request field or a DMG beam adjustment element field in the BRP frame indicates performing truncation and feedback on the time domain channel estimation and sensing sequence.

In some embodiments, the time domain channel estimation and sensing sequence sent by the second sensing responding device 230 includes a time domain CEF sequence. The seventh receiving module 2120 is configured to receive, by using the second sensing responding device 230, the truncated time domain channel estimation and sensing sequence from the first sensing responding device 220 by using a sensing feedback element field.

It should be understood that the operations and features described above at the sensing initiating device 210, the first sensing responding device 220, and the second sensing responding device 230 with reference to FIG. 2 to FIG. 18b are also applicable to the apparatus 1900, the apparatus 2000, and the apparatus 2100, and have the same effect. Details are not described again.

Modules included in the apparatus 1900, the apparatus 2000, and the apparatus 2100 may be implemented in various manners, including software, hardware, firmware, or any combination thereof. In some embodiments, one or more modules may be implemented by using software and/or firmware, for example, machine-executable instructions stored in a storage medium. In addition to or as an alternative to machine-executable instructions, some or all of the modules in the apparatus 1900, the apparatus 2000, and the apparatus 2100 may be implemented at least partially by one or more hardware logical components. By way of example and not limitation, the available example hardware logic components include a field programmable gate array (FPGA), an application-specific integrated circuit (ASIC), an application-specific standard product (ASSP), a system on chip (SOC), and a complex programmable logic device (CPLD).

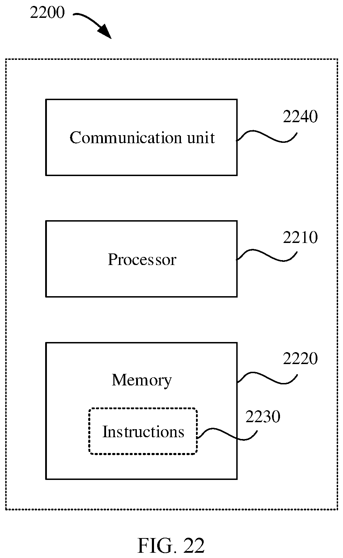

FIG. 22 illustrates a block diagram of a device 2200 in which some embodiments of this disclosure may be implemented. The device 2200 may be configured to implement the sensing initiating device 210, the first sensing responding device 220, or the second sensing responding device 230 shown in FIG. 2.

As shown in FIG. 22, the device 2200 includes a processor 2210, and the processor 2210 controls operations and functions of the device 2200. For example, in some example embodiments, the processor 2210 may perform various operations by using instructions 2230 stored in a memory 2220 coupled to the processor 2210. The memory 2220 may be of any proper type applicable to a local technical environment, and may be implemented by using any suitable data storage technology, including but not limited to a semiconductor-based storage device, a magnetic storage device and system, and an optical storage device and system. Although only one memory unit is shown in FIG. 22, there may be a plurality of physically different memory units in the device 2200.

The processor 2210 may be of any proper type suitable for a local technical environment, and may include but is not limited to one or more of a general-purpose computer, a dedicated computer, a microcontroller, a digital signal processor (DSP), and a controller-based multi-core controller architecture. The device 2200 may also include a plurality of processors 2210. The processor 2210 is coupled to a communication unit 2240. The communication unit 2240 may receive and send information by using a radio signal or through an optical fiber, a cable, and/or another component.

When the device 2200 acts as a sensing initiating device 210, the processor 2210 may implement the operations and actions at the sensing initiating device 210 as described above with reference to FIG. 2 to FIG. 15 by executing instructions. When the device 2200 acts as a first sensing initiating device 220, the processor 2210 may implement the operations and actions at the first sensing initiating device 220 as described above with reference to FIG. 2 to FIG. 16 by executing instructions. When the device 2200 acts as a second sensing initiating device 230, the processor 2210 may implement the operations and actions at the second sensing initiating device 230 as described above with reference to FIG. 2 to FIG. 18b by executing instructions. All features described above with reference to FIG. 2 to FIG. 22 are applicable to the device 2200. Details are not described herein again.

In general, the various example embodiments of this disclosure may be implemented in hardware or dedicated circuitry, software, logic, or any combination thereof. Some aspects may be implemented in hardware, while other aspects may be implemented in firmware or software that may be executed by a controller, a microprocessor, or another computing device. When aspects of the example embodiments of this disclosure are illustrated or described as block diagrams, flowcharts, or represented using other figures, it will be understood that the blocks, apparatuses, systems, techniques, or methods described herein may be implemented as non-limiting examples in hardware, software, firmware, dedicated circuitry or logic, general-purpose hardware or controllers, or other computing devices, or some combinations thereof.

As an example, the example embodiments of this disclosure may be described in the context of a computer-readable storage medium storing a program or instructions, a computer program product including a program or instructions, and a computer program and machine-executable or computer-executable instructions. The machine-executable instructions are included, for example, in a program module executed in a device on a real or virtual processor of a target. Usually, the program module includes a routine, a program, a library, an object, a class, a component, a data structure, and the like, and executes a specific task or implements a specific abstract data structure. In various example embodiments, functions of program modules may be combined or split between the described program modules. The machine-executable instruction for the program module may be executed locally or within a distributed device. In the distributed device, the program module may be located in both a local storage medium and a remote storage medium.

Computer program code used to implement the methods disclosed in this disclosure may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed all on a computer, partially on a computer, as an independent software package, partially on a computer and partially on a remote computer, or all on a remote computer or server.

In the context of this disclosure, a machine-readable medium or a computer-readable medium may be any tangible medium that includes or stores a program for or has a program related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any appropriate combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any appropriate combination thereof.

In addition, while operations are described in a particular order, this should not be understood as requiring such operations to be completed in the particular order shown or in a successive order, or performing all the illustrated operations to obtain the desired results. In some cases, multitasking or parallel processing is advantageous. Similarly, while the foregoing descriptions include some specific implementation details, this should not be construed as limiting the scope of any invention or claims, but rather as a description of specific example embodiments that may be specific to a particular invention. Some features described in this specification in the context of separate example embodiments may alternatively be integrated into a single example embodiment. Conversely, various features that are described in the context of a single example embodiment may alternatively be implemented separately in multiple example embodiments or in any suitable sub-combination.

Although the subject matter has been described in language specific to structural features and/or methodological actions, it should be understood that the subject matter defined in the appended claims is not limited to the specific features or actions described above. Rather, the specific features and actions described above are disclosed as example forms of implementing the claims.

**Claims**

1.  A communication method, comprising:

    sending, by a sensing initiating device to a first sensing responding device, a first indication indicating that the first sensing responding device is used as a sensing receiver; and
    sending, by the sensing initiating device, a second indication to the first sensing responding device, wherein the second indication indicates the first sensing responding device to feed back a truncated time domain channel estimation and sensing sequence.

2.  The method according to claim 1, further comprising:

    receiving, by the sensing initiating device, the truncated time domain channel estimation and sensing sequence from the first sensing responding device; and
    performing, by the sensing initiating device, channel estimation and target sensing based on the truncated time domain channel estimation and sensing sequence.

3.  The method according to claim 2, wherein

    the truncated time domain channel estimation and sensing sequence fed back by the first sensing responding device is a part of a time domain long training field LTF sequence received by the first sensing responding device; and
    the receiving the truncated time domain channel estimation and sensing sequence comprises: receiving, by the sensing initiating device, the truncated time domain channel estimation and sensing sequence from the first sensing responding device by using a truncated long training field T-LTF frame.

4.  The method according to claim 3, wherein

    the truncated time domain channel estimation and sensing sequence that is fed back by the first sensing responding device is represented by a T-LTF matrix; and
    the T-LTF frame comprises a multiple-input multiple-output MIMO control field, and the MIMO control field comprises an indication for at least one of a quantity of columns, a quantity of rows, or a quantity of quantization bits of a matrix element of the T-LTF matrix.

5.  The method according to claim 2, wherein

    the truncated time domain channel estimation and sensing sequence fed back by the first sensing responding device is a part of a time domain channel estimation field CEF sequence received by the first sensing responding device; and
    the receiving the truncated time domain channel estimation and sensing sequence comprises: receiving, by the sensing initiating device, the truncated time domain channel estimation and sensing sequence from the first sensing responding device by using a sensing feedback element field.

6.  The method according to claim 1, further comprising:

    sending, by the sensing initiating device to a second sensing responding device, a third indication indicating that the second sensing responding device is used as a sensing sender;
    sending, by the sensing initiating device, the second indication to the second sensing responding device, wherein the second indication further indicates the second sensing responding device to perform channel estimation and target sensing based on the truncated time domain channel estimation and sensing sequence fed back by the first sensing responding device.

7. The method according to claim 1, further comprising:
sending, by the sensing initiating device, a fourth indication about a truncation ratio of the time domain channel estimation and sensing sequence to the first sensing responding device.

8. The method according to claim 1, wherein the sending a second indication comprises:
sending, by the sensing initiating device, the second indication to the first sensing responding device by using at least one of an announcement frame, a trigger frame, a null data packet announcement NDPA frame, or a beam refinement protocol BRP frame.

9. The method according to claim 8, wherein a common information field or a dedicated information field in the trigger frame indicates performing truncation and feedback on the time domain channel estimation and sensing sequence.

10. The method according to claim 9, wherein a trigger type field comprised in the common information field in the trigger frame indicates performing truncation and feedback on the time domain channel estimation and sensing sequence.

11. The method according to claim 8, wherein a sounding dialog token field or a dedicated information field in the NDPA frame indicates performing truncation and feedback on the time domain channel estimation and sensing sequence.

12. The method according to claim 11, wherein an association identifier AID field comprised in the dedicated information field in the NDPA frame indicates performing truncation and feedback on the time domain channel estimation and sensing sequence.

13. The method according to claim 8, wherein a BRP request field or a directional multi-gigabit DMG beam adjustment element field in the BRP frame indicates performing truncation and feedback on the time domain sensing signal.

14. A communication method, comprising:

receiving, by a first sensing responding device from a sensing initiating device, a first indication indicating that the first sensing responding device is used as a sensing receiver;
receiving, by the first sensing responding device, a second indication from the sensing initiating device, wherein the second indication indicates the first sensing responding device to feed back a truncated time domain channel estimation and sensing sequence;
truncating, by the first sensing responding device, the received time domain channel estimation and sensing sequence; and
feeding back, by the first sensing responding device, the truncated time domain channel estimation and sensing sequence.

15. The method according to claim 14, further comprising:

receiving, by the first sensing responding device from the sensing initiating device, a fourth indication about a truncation ratio of the time domain channel estimation and sensing sequence; and
the truncating the received time domain channel estimation and sensing sequence comprises: truncating, by the first sensing responding device, the received time domain channel estimation and sensing sequence based on the truncation ratio.

16. The method according to claim 14, wherein

the time domain channel estimation and sensing sequence comprises a cyclic prefix CP; and
the truncated time domain channel estimation and sensing sequence excludes the CP.

17. The method according to claim 14, wherein the feeding back the truncated time domain channel estimation and sensing sequence comprises:
sending, by the first sensing responding device, the truncated time domain channel estimation and sensing sequence to the sensing initiating device.

**18.** The method according to claim 14, wherein

the time domain channel estimation and sensing sequence is received by the first sensing responding device from a second sensing responding device; and

the feeding back, by the first sensing responding device, the truncated time domain channel estimation and sensing sequence comprises: sending, by the first sensing responding device, the truncated time domain channel estimation and sensing sequence to the second sensing responding device.

**19.** The method according to claim 14, wherein the receiving a second indication comprises: receiving, by the first sensing responding device, the second indication from the sensing initiating device by using at least one of an announcement frame, a trigger frame, a null data packet announcement NDPA frame, or a beam refinement protocol BRP frame.

**20.** The method according to claim 19, wherein a common information field or a dedicated information field in the trigger frame indicates performing truncation and feedback on the time domain channel estimation and sensing sequence.

**21.** The method according to claim 20, wherein a trigger type field comprised in the common information field in the trigger frame indicates performing truncation and feedback on the time domain channel estimation and sensing sequence.

**22.** The method according to claim 19, wherein a sounding dialog token field or a dedicated information field in the NDPA frame indicates performing truncation and feedback on the time domain channel estimation and sensing sequence.

**23.** The method according to claim 22, wherein an association identifier AID field comprised in the dedicated information field in the NDPA frame indicates performing truncation and feedback on the time domain channel estimation and sensing sequence.

**24.** The method according to any one of claims 20 to 23, wherein

the truncated time domain channel estimation and sensing sequence is a part of a time domain long training field LTF sequence received by the first sensing responding device; and

the feeding back the truncated time domain channel estimation and sensing sequence comprises: feeding back, by the first sensing responding device, the truncated time domain channel estimation and sensing sequence by using a truncated long training field T-LTF frame.

**25.** The method according to claim 24, wherein

the truncated time domain channel estimation and sensing sequence that is fed back by the first sensing responding device is represented by a T-LTF matrix; and

the T-LTF frame comprises a multiple-input multiple-output MIMO control field, and the MIMO control field comprises an indication for at least one of a quantity of columns, a quantity of rows, or a quantity of quantization bits of a matrix element of the T-LTF matrix.

**26.** The method according to claim 19, wherein a BRP request field or a directional multi-gigabit DMG beam adjustment element field in the BRP frame indicates performing truncation and feedback on the time domain channel estimation and sensing sequence.

**27.** The method according to claim 26, wherein

the truncated time domain channel estimation and sensing sequence is a part of a time domain channel estimation field CEF sequence received by the first sensing responding device; and

the feeding back the truncated time domain channel estimation and sensing sequence comprises: feeding back, by the first sensing responding device, the truncated time domain channel estimation and sensing sequence by using a sensing feedback element field.

**28.** A communication method, comprising:

receiving, by a second sensing responding device from a sensing initiating device, a third indication indicating that the second sensing responding device is used as a sensing sender;

receiving, by the second sensing responding device, a second indication from the sensing initiating device, wherein the second indication indicates the second sensing responding device to perform channel estimation and target sensing based on a truncated time domain channel estimation and sensing sequence fed back by a first sensing responding device;

sending, by the second sensing responding device, the time domain channel estimation and sensing sequence to the first sensing responding device;

receiving, by the second sensing responding device, the truncated time domain channel estimation and sensing sequence from the first sensing responding device; and

performing, by the second sensing responding device, channel estimation and target sensing based on the truncated time domain channel estimation and sensing sequence.

29. The method according to claim 28, wherein the receiving a second indication comprises:

receiving, by the second sensing responding device, the second indication from the sensing initiating device by using at least one of an announcement frame, a trigger frame, a null data packet announcement NDPA frame, or a beam refinement protocol BRP frame.

30. The method according to claim 29, wherein a common information field or a dedicated information field in the trigger frame indicates performing truncation and feedback on the time domain channel estimation and sensing sequence.

31. The method according to claim 30, wherein a trigger type field comprised in the common information field in the trigger frame indicates performing truncation and feedback on the time domain channel estimation and sensing sequence.

32. The method according to claim 29, wherein a sounding dialog token field or a dedicated information field in the NDPA frame indicates performing truncation and feedback on the time domain channel estimation and sensing sequence.

33. The method according to claim 32, wherein an association identifier AID field comprised in the dedicated information field in the NDPA frame indicates performing truncation and feedback on the time domain channel estimation and sensing sequence.

34. The method according to any one of claims 30 to 33, wherein

the time domain channel estimation and sensing sequence sent by the second sensing responding device comprises a time domain long training field LTF sequence; and

the receiving the truncated time domain channel estimation and sensing sequence comprises: receiving, by the second sensing responding device, the truncated time domain channel estimation and sensing sequence from the first sensing responding device by using a truncated long training field T-LTF frame.

35. The method according to claim 34, wherein

the truncated time domain channel estimation and sensing sequence received by the second sensing responding device is represented by a T-LTF matrix; and

the T-LTF frame comprises a multiple-input multiple-output MIMO control field, and the MIMO control field comprises an indication for at least one of a quantity of columns, a quantity of rows, or a quantity of quantization bits of a matrix element of the T-LTF matrix.

36. The method according to claim 29, wherein a BRP request field or a directional multi-gigabit DMG beam adjustment element field in the BRP frame indicates performing truncation and feedback on the time domain channel estimation and sensing sequence.

37. The method according to claim 36, wherein

the time domain channel estimation and sensing sequence sent by the second sensing responding device comprises a time domain channel estimation field CEF sequence; and

the receiving the truncated time domain channel estimation and sensing sequence comprises: receiving, by the second sensing responding device, the truncated time domain channel estimation and sensing sequence from the first sensing responding device by using a sensing feedback element field.

38. A communication device, comprising:

a processor, wherein the processor is coupled to a memory, and the memory stores instructions, wherein when the instructions are executed by the processor, the method according to any one of claims 1 to 12, claims 13 to 27, or claims 28 to 37 is performed.

39. A computer-readable storage medium storing a program, wherein when at least a part of the program is executed by a processor in a device, the device performs the method according to any one of claims 1 to 12, claims 13 to 27, or claims 28 to 37.

STA 110

130

STA 120

STA 115

125

135

140

FIG. 1a

100

STA 110

160

STA 120

STA 115

145

150

155

FIG. 1b

105

200

Sensing initiating device ⟋ 210

First sensing responding device  ⟷  Second sensing responding device ⟋ 230

220

FIG. 2

FIG. 3

FIG. 4

FIG. 5a

FIG. 5b

FIG. 5c

FIG. 6

FIG. 7

765

805          810

| Frame Control Frame control | Duration Duration | RA Receiving address | TA Transmitt- ing address | Common Info Common information | STA Info 1 Station information 1 | ... | STA Info n Station information n | Padding Padding | FCS Frame check sequence |
|---|---|---|---|---|---|---|---|---|---|

←———— MAC header ————→

FIG. 8a

| Trigger type Frame control | UL Length Uplink length | ... | ... | Doppler Doppler | ULHE-SIG-A2 Reserved ULHE-SIG-A2 Reserved | Reserved Reserved | Trigger Dependent Common Info Common information based on a trigger |
|---|---|---|---|---|---|---|---|

815   805   820

FIG. 8b

EP 4 346 134 A1

820

825

Report ratio
Report ratio

...                    ...

FIG. 8c

760

905    910

| Frame Control Frame control | Duration Duration | RA Receiving address | TA Transmitting address | Sounding Dialog Token Sounding dialog token | STA Info 1 Station information 1 | ... | STA Info n Station information n | FCS Frame check sequence |
|---|---|---|---|---|---|---|---|---|

◄——————— MAC header ———————►

FIG. 9a

STA Info1
Station
information 1

910

32 bits

915

| AID11<br>11-bit ID | Report ratio<br>Report ratio | Reserved<br>Reserved | Disambiguity<br>Disambiguity | Reserved<br>Reserved |
|---|---|---|---|---|
| Bit     11 | | | 1 | 4 |

920

FIG. 9b

FIG. 10

I-TXSS

SSW ... SSW SSW

Semi-omnidirectional

SSW-feedback

BRP

BRP with final feedback

SSW SSW ... SSW

Semi-omnidirectional

BRP BRP BRP BRP

1000

Beam training initiator 1005

Beam training responder 1010

1100

1105

1110

| EDMG-SHORT-BRP<br>EDMG short BRP | EDMG-SHORT-FBCK<br>EDMG short feedback | EDMG-TRUNCATED-CES<br>EDMG truncated channel estimation sequence | Reserved<br>Reserved |
|---|---|---|---|
| 1 | 1 | 1 | 2 |

Bit

...

FIG. 11

EP 4 346 134 A1

FIG. 12

1300

```
A first sensing responding device receives, from a sensing initiating device,
a first indication indicating that the first sensing responding device is used       ⌇ 1305
                            as a sensing receiver
```

```
The first sensing responding device receives a second indication about
truncation and feedback of a time domain sensing signal from the sensing            ⌇ 1310
                          initiating device
```

```
The first sensing responding device truncates the received time domain              ⌇ 1315
                          sensing signal
```

```
The first sensing responding device feeds back the truncated time domain            ⌇ 1320
                          sensing signal
```

FIG. 13

1400

| Nc Index Quantity of columns | Nr Index Quantity of rows | BW Bandwidth | Grouping Grouping | Coefficient Size Coefficient size | Feedback Type Feedback type | ... |
|---|---|---|---|---|---|---|
| Bit     3 | 3 | 2 | 1 | 3 | 2 | |

FIG. 14

| B0          B3 | B4          B7 | B8        B10 | B11 | B12 | B13      B14 |
|----------------|----------------|---------------|---------|---------------------------------|------------------|
| Nc Index | Nr Index | BW | Grouping | Codebook Information (TBD) | Feedback Type |

Bit   4   4   3   1   1   2

| B15    B17 | B18 | B19    B27 | B28    B33 | B34                                              B39 |
|--------------------------------------|------------------------------|---------------------|----------------------------------------|----------------|
| Remaining Feedback Segments (TBD) | First Feedback Segment (TBD) | Partial BW Info (TBD) | Sounding Dialog Token Number (TBD) | Reserved (TBD) |

Bit   3   1   9   3   6

FIG. 15

1600

| NcIndex Quantity of columns | Nr Index Quantity of rows | BW Bandwidth | Grouping Grouping | Coefficient size Coefficient size | Feedback Type Feedback type | TBD | ... |
|-----------------------------|---------------------------|--------------|-------------------|-----------------------------------|-----------------------------|-----|-----|

Bit   4   4   3   1   3   2

FIG. 16

1700 ⟍

| A second sensing responding device receives, from a sensing initiating device, a third indication indicating that the second sensing responding device is used as a sensing sender | 1705 |

| The second sensing responding device receives a second indication about truncation and feedback of a time domain sensing signal from the sensing initiating device | 1710 |

| The second sensing responding device sends a time domain sensing signal to a first sensing responding device | 1715 |

| The second sensing responding device receives the truncated time domain sensing signal from a first sensing responding device | 1720 |

| The second sensing responding device performs channel estimation based on the truncated time domain sensing signal | 1725 |

FIG. 17

FIG. 18a

FIG. 18b

1900

First sending module — 1905

Second sending module — 1910

FIG. 19

2000

Second receiving module — 2005

Third receiving module — 2010

Truncation module — 2015

Feedback module — 2020

FIG. 20

2100

Fifth receiving module    2105

Sixth receiving module    2110

Fifth sending module    2115

Seventh receiving module    2120

Second channel estimation module    2125

FIG. 21

2200

Communication unit —— 2240

Processor —— 2210

Memory —— 2220

Instructions —— 2230

FIG. 22

## INTERNATIONAL SEARCH REPORT

| International application No. |
|---|
| **PCT/CN2022/094791** |

**A.  CLASSIFICATION OF SUBJECT MATTER**

H04L 1/00(2006.01)i; H04W 84/12(2009.01)i

According to International Patent Classification (IPC) or to both national classification and IPC

**B.  FIELDS SEARCHED**

Minimum documentation searched (classification system followed by classification symbols)

H04L 1/-; H04W 84/-

Documentation searched other than minimum documentation to the extent that such documents are included in the fields searched

Electronic data base consulted during the international search (name of data base and, where practicable, search terms used)

CNABS, CNTXT, CNKI, 万方: WLAN, WiFi, Wi-Fi, CSI, PPDU, LTF, CEF, 无线, 感知, 反馈, 信道估计, 时域长训练字段, 训练序列, 截断, 采样, 部分, 开销, 减少; VEN, WOTXT, EPTXT, USTXT, 3GPP, IEEE: initiator, long training field, feedback, CSI, Channel estimation, reprot, CSI, reduc+, sensing, wifi, wi-fi, truncated , CEF, overhead, responder, WLAN, PPDU, wireless sensing, overhead, WLAN sensing, LTF, ratio

**C.  DOCUMENTS CONSIDERED TO BE RELEVANT**

| Category* | Citation of document, with indication, where appropriate, of the relevant passages | Relevant to claim No. |
|---|---|---|
| PX | WO 2022057996 A1 (ERICSSON TELEFON AB., L M.) 24 March 2022 (2022-03-24) description, paragraphs 57 and 59 | 1-39 |
| X | CN 104246532 A (INTEL CORP.) 24 December 2014 (2014-12-24) description, paragraphs 48 and 51 | 1-27, 38-39 |
| Y | CN 104246532 A (INTEL CORP.) 24 December 2014 (2014-12-24) description, paragraphs 48 and 51 | 28-39 |
| Y | Sang Kim etc. "Collaborative WLAN Sensing – Follow Ups" *IEEE 802.11-21/0145r2*, 01 February 2021 (2021-02-01), p. 11 | 28-39 |
| A | CN 112350809 A (HUAWEI TECHNOLOGIES CO., LTD.) 09 February 2021 (2021-02-09) entire document | 1-39 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 July 2022** | **11 August 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/094791** |

| Patent document cited in search report | | | Publication date (day/month/year) | Patent family member(s) | | | Publication date (day/month/year) |
| --- | --- | --- | --- | --- | --- | --- | --- |
| WO | 2022057996 | A1 | 24 March 2022 | None | | | |
| CN | 104246532 | A | 24 December 2014 | US | 2017023660 | A1 | 26 January 2017 |
| | | | | RU | 2014138926 | A | 20 April 2016 |
| | | | | EP | 2984501 | A1 | 17 February 2016 |
| | | | | US | 2015168537 | A1 | 18 June 2015 |
| | | | | WO | 2014168649 | A1 | 16 October 2014 |
| | | | | US | 9304186 | B2 | 05 April 2016 |
| | | | | RU | 2597867 | C2 | 20 September 2016 |
| | | | | EP | 2984501 | A4 | 07 December 2016 |
| | | | | CN | 104246532 | B | 08 March 2017 |
| | | | | EP | 2984501 | B1 | 14 April 2021 |
| CN | 112350809 | A | 09 February 2021 | WO | 2021023093 | A1 | 11 February 2021 |

Form PCT/ISA/210 (patent family annex) (January 2015)